# EUROPEAN PATENT SPECIFICATION

(11) **EP 2 669 356 B1**
(45) Date of publication and mention of the grant of the patent: **02.11.2016**
(21) Application number: 13172890.9
(22) Date of filing: 21.11.2011
(51) Int. Cl.: C10M 149/02, C08G 63/685, C08G 63/91, C10M 159/12, C10L 1/222, C10L 1/224, C10L 1/238, C10L 1/2383, C10L 1/26, C10L 10/18, C08L 77/12, C10N 20/02, C10N 30/06, C10N 40/04, C10N 40/08, C10N 40/20, C10N 40/25

(54) **Lubricating composition**
Schmierzusammensetzung
Composition de lubrification

(30) Priority: 23.11.2010 US 416342 P
(43) Date of publication of application: 04.12.2013
(62) Divisional of application: 11791394.7
(73) Proprietor: The Lubrizol Corporation, Wickliffe, Ohio 44092-2298 (US)
(72) Inventor: Barton, William, Derby, DE56 1QN (GB); Huston, Michael, Wickliffe OH 44092-2298 (US); Edgar, Julie, Cleveland OH 44141 (US); Baker, Mark R., Wickliffe OH 44092-2298 (US)
(74) Representative: D Young & Co LLP

(56) References cited:
- EP-A1- 1 495 098
- WO-A1-2010/014655
- US-A- 2 977 334

## Description

### FIELD OF INVENTION

The present invention relates to a lubricating composition comprising an oil of lubricating viscosity and a (thio)phosphate salt of an amine-functionalized esterified copolymer, wherein the esterified copolymer comprises units derived from monomers: (i) an α-olefin and (ii) an ethylenically unsaturated carboxylic acid or derivatives thereof, that are esterified with an alcohol, or mixtures thereof, wherein at least a portion of carboxylic acid groups not esterified react with an amine; and wherein the (thio)phosphate salt of the amine-functionalised esterified copolymer is present in the lubricating composition in an amount of from 0.1 wt% to 70 wt%. The invention further provides a method a mechanical device.

### BACKGROUND OF THE INVENTION

Viscosity index improvers are known to be added to lubricating oil compositions to improve the viscosity index of the lubricant. Typical viscosity index improvers include polymers of methacrylates, acrylates, olefins (such as copolymers of alpha-olefins and maleic anhydride and esterified derivatives thereof), or maleic-anhydride styrene copolymers, and esterified derivatives thereof. However, such viscosity index improvers can have poor shear stability, too high a viscosity at low temperature, poor fuel economy, and poor non-dispersant cleanliness.

U.S. Patents 4,526,950; 6,419,714; 6,573,224; 6,174,843 6,419,714; and 4,526,950, and International Application WO 07/133999 all disclose olefin copolymers for lubricating compositions

International publication WO2010/014655 A discloses a copolymer comprising units derived from monomers (i) an α-olefin and (ii) an ethylenically unsaturated carboxylic acid or derivatives thereof esterified with a primary alcohol branched at the β- or higher position, wherein the copolymer, prior to esterification, has a reduced specific viscosity of up to 0.08. The copolymer is useful to provide to a lubricant composition at least one of acceptable or improved shear stability, acceptable or improved viscosity index control, acceptable or improved low temperature viscosity and acceptable or improved oxidation control.

Antiwear agents such as phosphate alkyl ammonium chemistry have been employed in many transmission or axle lubricants as part of an antiwear package.

However, many of the amines disclosed may also detrimentally affect one or more of compatibility with mechanical device seals, metal corrosion, odour, handling, biodegradability, or oxidative cleanliness.

U.S. 3,484,504 discloses the addition reaction product of oxyalkylenated hydroxy-hydrocarbon phosphate or thiophosphate and polymeric reaction product containing basic nitrogen, the latter being (1) the reaction product of an unsaturated polymerizable ethylenic compound and an unsaturated polymerizable ethylenic compound containing basic nitrogen or (2) the reaction product of a polyamine or alkanolamine with the condensation product of an unsaturated polymerizable ethylenic compound and polycarboxylic acid, anhydride or ester thereof.

European Patent Application EP 1495098 A discloses a lubricating composition comprising a major amount of an oil of lubricating viscosity and a minor amount of a salt of a phosphorus acid ester and a nitrogen containing polyacrylate wherein the phosphorus acid ester is a phosphoric acid ester prepared from reacting a dithiophosphoric acid with an epoxide or a glycol to form an intermediate and further reacting the intermediate with a phosphorus acid or anhydride, wherein the nitrogen containing polyacrylate is prepared from at least one acrylate or methacrylate ester and a nitrogen containing monomer, wherein the polyacrylate is prepared from a combination of: a) methacrylic acid esters containing from 9 to 25 carbon atoms in the ester group, b) methacrylic acid esters containing 7 to 12 carbon atoms in the ester group and at least one nitrogen containing monomer, and wherein the salt is prepared by combining 0.5 to 10 parts by weight of the phosphorus acid ester with 99.5 to 90 parts by weight of the nitrogen containing polyacrylate.

US Patent 2,977,334 discloses derivatives of copolymers of ethylene and maleic anhydride and their use in lubricating oils.

### SUMMARY OF THE INVENTION

An objective of the present invention is to provide an antiwear additive capable of utilization in a lubricating composition. Another objective of the present invention is to provide an additive capable of at least one of the following: reduced incompatibility with mechanical device seals, decreased metal corrosion, decreased wear, decreased odour, improved handling, improved biodegradability, improved oxidative cleanliness, improved low temperature performance, improved viscosity index, viscosity modifier performance, or improved antifoam performance.

In one embodiment the invention provides a lubricating composition comprising an oil of lubricating viscosity and a (thio)phosphate salt of an amine-functionalized esterified copolymer, wherein the esterified copolymer comprises units derived from monomers: (i) an α-olefin and (ii) an ethylenically unsaturated carboxylic acid or derivative thereof, esterified with at least one alcohol, and wherein at least a portion of carboxylic acid groups are reacted with at least one amine.

As otherwise expressed, the invention provides a lubricating composition comprising an oil of lubricating viscosity and a (thio)phosphate salt of an amine-functionalized esterified copolymer, wherein the esterified copolymer comprises units derived from monomers (i) an α-olefin and (ii) an ethylenically unsaturated carboxylic acid or derivatives thereof (typically carboxylic acid groups or an anhydride), that are esterified with an alcohol, or mixtures thereof, and wherein at least a portion of carboxylic acid groups not esterified react with an amine. Reaction with the amine may be referred to as capping with an amine. The amine is typically capable of forming a salt by reaction with a (thio)phosphate. The copolymer may have a measurable TBN (as determined by ASTM method D2986).

The copolymer of the invention may include 400 ppm to 4000 ppm, or 750 ppm to 3000 ppm of phosphorus.

As used herein the expression "(thio)phosphate" is intended to include a thiophosphate and a phosphate, and a thiophosphate also includes a dithiophosphate.

In one embodiment the invention provides a lubricating composition comprising an oil of lubricating viscosity and a (thio)phosphate salt of an amine-functionalized esterified copolymer, wherein the esterified copolymer comprises units derived from monomers: (i) an α-olefin and (ii) an ethylenically unsaturated carboxylic acid or derivatives thereof, that has been esterified, with an alcohol, or mixtures thereof, wherein the alcohol may be a primary alcohol and branched at the β- or higher position.

In one embodiment the copolymer may have, prior to esterification, a reduced specific viscosity of up to 0.08, or 0.02 to 0.08 (or 0.02 to 0.07, 0.03 to 0.07 or 0.04 to 0.06). Typically the RSV ranges described herein are based on the mean of three measurements made on the copolymer.

The copolymer may, instead of RSV, be defined in terms of weight average molecular weight. Typically the weight average molecular weight is measured on the final esterified copolymer, capped with an amine. The weight average molecular weight may be 5000 to 25,000, or 5000 to 20,000, or 10,000 to 18000 or 13,000 to 18,000.

The copolymer reduced specific viscosity (RSV) is measured by the formula RSV = (Relative Viscosity - 1)/Concentration, wherein the relative viscosity is determined by measuring, by means of a dilution viscometer, the viscosity of a solution of 1.6 g of the copolymer in 100 cm³ of acetone and the viscosity of acetone at 30 °C. A more detailed description of RSV is provided below. The RSV is determined for the copolymer of an α-olefin and (ii) an ethylenically unsaturated carboxylic acid or derivatives thereof before esterification.

In one embodiment the copolymer described above comprises at least one ester group and a nitrogen containing group (such as amino-, amido- and/or imido-group), typically sufficient to provide 0.01 wt % to 1.5 wt % (or 0.02 wt % to 0.75 wt %, or 0.04 wt % to 0.25 wt %) nitrogen to the copolymer.

In one embodiment the copolymer may be derived from monomers (i) an α-olefin and (ii) an ethylenically unsaturated carboxylic acid or derivatives thereof,
wherein 0.1 to 99.89 (or 1 to 50, or 2.5 to 20, or 5 to 15) percent of the carboxylic acid units esterified are functionalised with a primary alcohol branched at the β- or higher position,
wherein 0.1 to 99.89 (or 1 to 50, or 2.5 to 20, or 5 to 15) percent of the carboxylic acid units esterified are functionalised with a linear alcohol or an alpha-branched alcohol,
wherein 0.01 to 10 % (or 0.1 % to 20 %, or 0.02 % to 7.5 %, or 0.1 to 5 %, or 0.1 to less than 2 %) of the carboxylic acid units are functionalised and have a nitrogen containing group with at least one of an amino-, amido- and/or imido- group (and may typically include an aminoalkyl ester, an aminoalkyl amide, or an aminoalkyl imide). In one embodiment the copolymer has a reduced specific viscosity of up to 0.08.

In one embodiment the invention provides a lubricant or lubricant concentrate obtained (or obtainable) by admixing the copolymer of the invention with (i) an oil of lubricating viscosity, and (ii) at least one other performance additives (as defined below).

In one embodiment the invention provides a method of lubricating a mechanical device comprising supplying to the mechanical device a lubricating composition comprising an oil of lubricating viscosity and a (thio)phosphate salt of an amine-functionalized esterified copolymer, wherein the esterified copolymer comprises units derived from monomers: (i) an α-olefin and (ii) an ethylenically unsaturated carboxylic acid or derivatives thereof, that are esterified with an alcohol, or mixtures thereof, and wherein at least a portion of carboxylic acid groups not esterified react with an amine.

In one embodiment the mechanical device may be a driveline device.

In one embodiment the invention provides for the use of the copolymer disclosed herein to provide to a lubricant composition with antiwear performance and at least one (or at least two, or all) of reduced incompatibility with mechanical device seals, decreased metal corrosion, decreased odour, improved handling, improved biodegradability, improved oxidative cleanliness, and improved antifoam performance.

In one embodiment the invention provides for the use of the copolymer disclosed herein in an axle oil to provide to a lubricant composition with antiwear performance and improved antifoam performance and optionally at least one (or at least two, or all) of reduced incompatibility with mechanical device seals, decreased metal corrosion, decreased odour, improved handling, improved biodegradability, and improved oxidative cleanliness.

### DETAILED DESCRIPTION OF THE INVENTION

The present invention provides a lubricating composition, a method and use as described above. In one embodiment the invention also provides a process for the preparation of the copolymer of the present invention.

A measurement correlating with molecular weight of the copolymer (or interpolymer such as an alternating copolymer) may be expressed in terms of the "reduced specific viscosity" of the copolymer which is a recognised means of expressing the molecular size of a polymeric substance. As used herein, the reduced specific viscosity (abbreviated as RSV) is the value typically obtained in accordance with the formula RSV = (Relative Viscosity - 1)/Concentration, wherein the relative viscosity is determined by measuring, by means of a dilution viscometer, the viscosity of a solution of 1.6 g of the polymer in 100 cm³ of acetone and the viscosity of acetone at 30 °C. For purpose of computation by the above formula, the concentration is adjusted to 1.6 g of the copolymer per 100 cm³ of acetone. A more detailed discussion of the reduced specific viscosity, also known as the specific viscosity, as well as its relationship to the average molecular weight of a copolymer, appears in Paul J. Flory, Principles of Polymer Chemistry, (1953 Edition) pages 308 et seq.

As used herein, the term "(meth)acryl" and related terms includes both acrylic and methacrylic groups.

### The Copolymer

The copolymer of the invention prepared by the reaction of monomers (i) an α-olefin and (ii) an ethylenically unsaturated carboxylic acid or derivatives thereof.

The α-olefin is 1-decene, 1-undecene, 1-dodecene, 1-tridecene, 1-tetradecene, 1-pentadecene, 1-hexadecene, 1-heptadecene 1-octadecene, or mixtures thereof. An example of a useful α-olefin is 1-dodecene.

The ethylenically unsaturated carboxylic acid or derivatives thereof may be an acid or anhydride or derivatives thereof that may be partially esterified. When partially esterified, other functional groups include acids, salts, imides, and amides, or mixtures thereof. Suitable salts include alkali metal, alkaline earth metal salts, or mixtures thereof. The salts include lithium, sodium, potassium, magnesium, calcium salts, or mixtures thereof. The unsaturated carboxylic acid or derivatives thereof includes acrylic acid, methyl acrylate, methacrylic acid, maleic acid or anhydride, fumaric acid, itaconic acid or anhydride or mixtures thereof, or substituted equivalents thereof.

Suitable examples of the ethylenically unsaturated carboxylic acid or derivatives thereof include itaconic anhydride, maleic anhydride, methyl maleic anhydride, ethyl maleic anhydride, dimethyl maleic anhydride or mixtures thereof. In one embodiment the ethylenically unsaturated carboxylic acid or derivatives thereof includes maleic anhydride, (meth)acrylic acid, or derivatives thereof such as esters and nitrogen-containing monomers. Such nitrogen-containing monomers include an amino-hydrocarbyl morpholine (such as n-aminopropylmorpholine), an aminoalcohol, N,N-dimethyl acrylamide, a N-vinyl carbonamide (such as N-vinyl formamide, N-vinyl acetamide, N-vinyl propionamide, N-vinyl hydroxyacetamide), vinyl pyridine, N-vinyl imidazole, N-vinyl pyrrolidinone, N-vinyl caproplactam, a dialkylaminoalkyl (meth)acrylamide or dialkylaminoalkyl (meth)acrylate, a N-substituted alkanediamaine (such as N-methyl-1,3-propanediamine), or mixtures thereof.

The copolymer may be prepared as is described in International publication WO2010/014655 A. For example, the copolymer of the invention prepared by the reaction of monomers (i) an α-olefin and (ii) an ethylenically unsaturated carboxylic acid or derivatives thereof are described in paragraph [0140] to [0141] of WO2010/014655 A. The copolymer may in one embodiment be a copolymer derived from 1-dodecene and maleic anhydride. Exemplified copolymers include those prepared below. The esterification and reaction of the acid monomer with an amine may occur prior to or after polymerization of the monomers; typically after polymerization.

Copolymer Backbone Preparation: A copolymer may be prepared by reacting in a 3 litre flask 1 mole of maleic anhydride, and Y moles (defined below) of 1-dodecene in the presence of 60 wt % of toluene solvent. The flask is fitted with a flange lid and clip, PTFE stirrer gland, rod and overhead stirrer, thermocouple, nitrogen inlet port and water-cooled condenser. Nitrogen is blown through the flask at 0.028 m³/hr (or 1 SCFH). A separate 500 ml flask with a side arm is charged with 0.05 moles of tert-butyl peroxy-2-ethylhexanoate initiator (a commercially available initiator from Akzo Nobel, known as Trigonox®21S), optionally n-dodecyl mercaptan (chain transfer agent, CTA) and additional toluene. A nitrogen line is fitted to the arm and nitrogen is applied at 0.085 m³/hr (or 0.3 SCFH) for 30 minutes. The 3 litre flask is heated to 105 °C. The Trigonox 21S initiator/toluene mixture is pumped from the 500 ml flask into the 3 litre flask via a Masterflex™ pump (flow rate set at 0.8 ml/min) over a period of 5 hours. The contents of the 3 litre flask are stirred for 1 hour before cooling to 95 °C. The contents of the 3 litre flask are stirred overnight. Typically a clear colourless gel is obtained. The amount of each reagent is shown in the table below.

The copolymers prepared are characterised by RSV method described in the description above. The RSV data is presented in the table.

| Copolymer Prep Example | Y moles of 1-Dodecene | Mole Ratio of CTA to Initiator | RSV |
|---|---|---|---|
| Cpp1 | 1 | 0:1 | 0.058 |
| Cpp2 | 0.95 | 0:1 | 0.071 |

The copolymer may optionally be prepared in the presence of a free radical initiator, solvent, chain transfer agent, or mixtures thereof. A person skilled in the art will appreciate that altering the amount of initiator and/or chain transfer agent will alter the number average molecular weight and RSV of the copolymer of the invention.

The solvent is known and is normally a liquid organic diluent. Generally, the solvent has as a boiling point thereof high enough to provide the required reaction temperature. Illustrative diluents include toluene, t-butyl benzene, benzene, xylene, chlorobenzene and various petroleum fractions boiling above 125 °C.

The free radical initiator is known and includes peroxy compounds, peroxides, hydroperoxides, and azo compounds which decompose thermally to provide free radicals. Other suitable examples are described in J. Brandrup and E. Immergut, Editor, "Polymer Handbook", 2nd edition, John Wiley and Sons, New York (1975), pages II-1 to II-40. Examples of a free radical initiator include those derived from a free radical-generating reagent, and examples include benzoyl peroxide, t-butyl perbenzoate, t-butyl metachloroperbenzoate, t-butyl peroxide, sec-butylperoxydicarbonate, azobisisobutyronitrile, t-butyl peroxide, t-butyl hydroperoxide, t-amyl peroxide, cumyl peroxide, t-butyl peroctoate, t-butyl-m-chloroperbenzoate, azobisisovaleronitrile or mixtures thereof. In one embodiment the free radical generating reagent is t-butyl peroxide, t-butyl hydroperoxide, t-amyl peroxide, cumyl peroxide, t-butyl peroctoate, t-butyl-m-chloroperbenzoate, azobisisovaleronitrile or mixtures thereof. Commercially available free radical initiators include classes of compound sold under the trademark Trigonox®-21 from Akzo Nobel.

The chain transfer agent is known to a person skilled in the art. The chain transfer agent may be added to a polymerisation as a means of controlling the molecular weight of the polymer. The chain transfer agent may include a sulphur-containing chain transfer agent such as n- and t-dodecyl mercaptan, 2-mercapto ethanol, methyl-3-mercaptopropionate. Terpenes can also be used. Typically the chain transfer agent may be n- and t-dodecyl mercaptan.

The esterfied copolymer may be formed by reaction of carboxylic acid groups of the ethylenically unsaturated carboxylic acid or derivatives thereof. The alcohol may be a linear or branched alcohol, a cyclic or acyclic alcohol, or a combination of features thereof. The alcohol typically reacts with the ethylenically unsaturated carboxylic acid or derivatives thereof (before or after polymerization, typically after) to form esterified groups.

The esterified groups may be derivable from linear or branched alcohols. The alcohol may have 1 to 150, or 4 to 50, or 8 to 20 carbon atoms. Typically the number of carbon atoms is sufficient to make the copolymer of the invention dispersible or soluble in oil.

In different embodiments the alcohol may be a primary alcohol branched at the β- or higher position may have at least 12 (or at least 16, or at least 18 or at least 20) carbon atoms. The number of carbon atoms may range from at least 12 to 60, or at least 16 to 30.

The alcohol may be a fatty alcohol of various chain lengths (typically containing 6 to 20, or 8 to 18, or 10 to 15 carbon atoms). The fatty alcohol includes Oxo Alcohol® 7911, Oxo Alcohol® 7900 and Oxo Alcohol® 1100 of Monsanto; Alphanol® 79 of ICI; Nafol® 1620, Alfol® 610 and Alfol® 810 of Condea (now Sasol); Epal® 610 and Epal® 810 of Ethyl Corporation; Linevol® 79, Linevol® 911 and Dobanol® 25 L of Shell AG; Lial® 125 of Condea Augusta, Milan; Dehydad® and Lorol® of Henkel KGaA (now Cognis) as well as Linopol® 7-11 and Acropol® 91 of Ugine Kuhlmann.

The esterified groups may be derivable from Guerbet alcohols. Guerbet alcohols typically have one or more carbon chains with branching at the β- or higher position. The Guerbet alcohols may contain 10 to 60, or 12 to 60, or 16 to 40 carbon atoms. Methods to prepare Guerbet alcohols are disclosed in US Patent 4,767,815 (see column 5, line 39 to column 6, line 32).

The Guerbet alcohols may have alkyl groups including the following:
1) alkyl groups containing C₁₅₋₁₆ polymethylene groups, such as 2-C₁₋₁₅ alkyl-hexadecyl groups (e.g. 2-octylhexadecyl) and 2-alkyl-octadecyl groups (e.g. 2-ethyloctadecyl, 2-tetradecyl-octadecyl and 2-hexadecyloctadecyl);
2) alkyl groups containing C₁₃₋₁₄ polymethylene groups, such as 1-C₁₋₁₅ alkyl-tetradecyl groups (e.g. 2-hexyltetradecyl, 2-decyltetradecyl and 2-undecyltridecyl) and 2-C₁₋₁₅ alkyl-hexadecyl groups (e.g. 2-ethyl-hexadecyl and 2-dodecylhexadecyl);
3) alkyl groups containing C₁₀₋₁₂polymethylene groups, such as 2-C₁₋₁₅ alkyl-dodecyl groups (e.g. 2-octyldodecyl) and 2-C₁₋₁₅ alkyl-dodecyl groups (2-hexyldodecyl and 2-octyldodecyl), 2-C₁₋₁₅ alkyl-tetradecyl groups (e.g. 2-hexyltetradecyl and 2-decyltetradecyl);
4) alkyl groups containing C₆₋₉polymethylene groups, such as 2-C₁₋₁₅ alkyl-decyl groups (e.g. 2-octyldecyl) and 2,4-di-C₁₋₁₅ alkyl-decyl groups (e.g. 2-ethyl-4-butyl-decyl group);
5) alkyl groups containing C₁₋₅ polymethylene groups, such as 2-(3-methylhexyl)-7-methyl-decyl and 2-(1,4,4-trimethylbutyl)-5,7,7-trimethyl-octyl groups; and
6) and mixtures of two or more branched alkyl groups, such as alkyl residues of oxoalcohols corresponding to propylene oligomers (from hexamer to undecamer), ethylene/propylene (molar ratio 16:1-1:11) oligomers, iso-butene oligomers (from pentamer to octamer), C₅₋₁₇ α-olefin oligomers (from dimer to hexamer).

Typically the Guerbet alcohol has two alkyl groups with the difference in the number of carbon atoms between the two alkyl groups of 4 or less relative to the longer chain alkyl group.

Examples of suitable primary alcohol branched at the β- or higher position include 2-ethylhexanol, 2-butyloctanol, 2-hexyldecanol, 2-octyldodecanol, 2-decyltetradecanol, or mixtures thereof.

In one embodiment the alcohol comprises a mixture of (i) a Guerbet alcohol and (ii) a linear alcohol other than a Guerbet alcohol. The other alcohol may be a fatty alcohol described above.

The copolymer of the invention may be esterified in the presence of an alcohol described above. In one embodiment, the esterified copolymer may be further treated with an alcohol (such as a C1-C6 alcohol, typically butanol) to react with residual carboxylic acid groups of the copolymer, thus reducing the acid number to a desired value. The esterification reaction of the alcohol with the ethylenically unsaturated carboxylic acid or derivatives thereof is outlined below.

Esterified Copolymer: The esterified copolymer may be prepared in a flask fitted with a Dean-Stark trap capped with a condenser. An amount of copolymer containing 1 mole of carboxy groups is heated in the flask to 110 °C and stirred for 30 minutes. One mole of alcohol is added. If the amount of the primary alcohol branched at the β- or higher position to be charged is greater than one mole, only one mole is added at this point. Conversely if less than one mole of the primary alcohol branched at the β- or higher position is intended, sufficient linear alcohol is used to provide a total of one mole equivalent of alcohol. The alcohol is pumped into the flask via peristaltic pump over a period of 35 minutes. Catalytic amounts of methane sulphonic acid along with the remaining moles of alcohol are then pumped into the flask over a period of 5 hours whilst heating to and holding at 145 °C and removing water in the Dean-Stark trap.

The reaction temperature is reduced to 135 °C, and sufficient butanol is added sequentially to the flask until the total acid number (TAN) is not higher than 4 mg KOH/g. The flask is heated to 150 °C and sufficient sodium hydroxide is added to quench the methanesulphonic acid. The flask is cooled to ambient temperature resulting in an esterified copolymer. Optionally, the product is vacuum stripped to remove any volatile materials such as water or alcohol.

The procedure may employ the materials listed in the table below.

| Ester Copolymer | Copolymer Prep | Moles of Linear Alcohol | Moles of Branched Alcohol | | |
|---|---|---|---|---|---|
| | | | B1 | B2 | B3 |
| Esc1 | Cpp1 | 2.0 | | | |
| Esc2 | Cpp1 | 1 | 1 | | |
| Esc3 | Cpp1 | 1 | | 1 | |
| Esc4 | Cpp1 | 1 | | | 1 |
| Esc5 | Cpp1 | 1.8 | 0.2 | | |
| Esc6 | Cpp1 | 1.8 | | 0.2 | |
| Esc7 | Cpp1 | 1.8 | | | 0.2 |
| Esc8 | Cpp1 | 0.5 | 1.5 | | |
| Esc9 | Cpp1 | 0.5 | | 1.5 | |
| Esc10 | Cpp1 | 0.5 | | | 1.5 |
| Esc11 | Cpp1 | | 2 | | |
| Esc12 | Cpp1 | | | 2 | |
| Esc13 | Cpp1 | | | | 2 |

| | | | | | |
|---|---|---|---|---|---|
| Footnote: The linear alcohol is a C₈₋₁₀ mixture commercially available as Alfol®810. Minor amounts of butanol are not included in the reported amounts. B1 is 2-hexyldecanol. B2 is 2-ethylhexanol. B3 is a 2-octyldodecanol. Moles of alcohol referred to in the table relate to the total number of moles of alcohol relative to the total number carboxyl groups of the unsaturated carboxylic acid of the copolymer. Typically 2 moles of alcohol react with two moles of carboxyl groups derived from maleic anhydride. | | | | | |

The esterified copolymer may be further reacted with an amine. The amine may include any amine capable of providing, when incorporated onto the copolymer, a TBN (i.e., a total base number) of greater than 0 mg KOH/g, or 1 to 20 mg KOH/g, or 2 to 12 mg KOH/g).

Examples of the amine include an amino-hydrocarbyl morpholine (such as n-aminopropylmorpholine), an aminoalcohol, N,N-dimethylacrylamide, a N-vinyl carbonamide (such as, N-vinyl-formamide, N-vinylacetoamide, N-vinyl propionamide, N-vinyl hydroxyacetoamide, vinyl pyridine, N-vinyl imidazole, N-vinyl pyrrolidinone, N-vinyl caprolactam, a dialkylaminoalkyl (meth)acrylamide or dialkylaminoalkyl (meth)acrylate, a N-substituted alkanediamine (such as d N-Methyl-1,3-propanediamine), or mixtures thereof.

Examples of the amine include an amino-hydrocarbyl morpholine (such as 3-morpholinopropylamine), an aminoalcohol, an N-substituted alkanediamine (such as N,N-dimethyl-1,3-propanediamine), or mixtures thereof. In one embodiment the amine may be N,N-dimethyl-1,3-propanediamine.

In one embodiment the amine may be an amino-hydrocarbyl morpholine (such as 3-morpholinopropylamine), an aminoalcohol or mixtures thereof.

The aminoalcohol may include a monoalkanolamine, a dialkanolamine, a trialkanolamine or mixtures thereof. Examples of the aminoalcohol include dimethylethanolamine, ethanolamine, isopropanolamine, diethanolamine, triethanolamine, N,N-diethylethanolamine, N,N-dimethylethanolamine, N,N-dibutylethanolamine, 3-amino-1,2-propanediol, serinol, 2-amino-2-methyl-1,3 -propanediol, tris(hydroxymethyl)-aminomethane, diisopropanolamine, N-methyldiethanolamine, 3-(dimethylamino)-2,2-dimethylpropan-1-ol, and 2-(2-aminoethylamino)ethanol.

When an amine such as an amino-hydrocarbyl morpholine or another non-hydroxy containing amine is used, the primary amino group tends to form an imide with the ethylenically unsaturated carboxylic acid or derivatives thereof. In addition, the phosphate salt tends to form by subsequent reaction of the acid phosphate with the tertiary amine. For example the phosphate salt tends to form by reaction with the tertiary amino group of amino-hydrocarbyl morpholine, or with the tertiary amino group of N,N-dialkyl hydrocarbyl (eg N,N-dimethylaminopropylamine reaction products)..

In one embodiment the amine may be amino-hydrocarbyl morpholine, an aminoalcohol, or mixtures thereof.

When an amine such as an aminoalcohol is used, the alcohol group tends to form (i) an ester with the units derived from the ethylenically unsaturated carboxylic acid or derivatives thereof if the amino group is tertiary; and (ii) an ester or amide with the units derived from the ethylenically unsaturated carboxylic acid or derivatives thereof if the amino group is primary or secondary. In addition, the phosphate salt tends to form by subsequent reaction of the phosphate with the amino group.

The amine may also include an alkylene polyamine, or mixtures thereof. The alkylene polyamine may be an ethylene polyamine, propylene polyamine, butylene polyamine, or mixtures thereof. Typically the polyamine may be an ethylene polyamine, or mixtures thereof. Ethylene polyamines, such as some of those mentioned above, are preferred. They are described in detail under the heading "Diamines and Higher Amines" in Kirk Othmer's "Encyclopedia of Chemical Technology", 4th Edition, Vol. 8, pages 74-108, John Wiley and Sons, N.Y. (1993) and in Meinhardt, et al, U.S. Pat. No. 4,234,435.

Examples of ethylene polyamine include ethylenediamine, diethylenetriamine, triethylenetetramine, tetraethylenepentamine, pentaethylenehexamine, N-(2-aminoethyl)-N'-[2-[(2-aminoethyl)amino]ethyl]-1,2-ethanediamine, alkylene polyamine still bottoms, or mixtures thereof.

The alkylene polyamine bottoms may be characterized as having less than 2%, usually less than 1% (by weight) material boiling below about 200°C. In the instance of ethylene polyamine bottoms, which are readily available and found to be quite useful, the bottoms contain less than about 2% (by weight) total diethylene triamine (DETA) or triethylene tetramine (TETA). A typical sample of such ethylene polyamine bottoms obtained from the Dow Chemical Company of Freeport, Tex., designated "E-100" has a specific gravity at 15.6 °C of 1.0168, a percent nitrogen by weight of 33.15 and a viscosity at 40 °C of 121 cSt (mm²/s). Gas chromatography analysis of such a sample showed it contains about 0.93% "Light Ends" (most probably diethylenetriamine), 0.72% triethylenetetramine, 21.74% tetraethylene pentamine and 76.61% pentaethylene hexamine and higher (by weight). A similar alkylene polyamine bottoms are commercially sold under as E100™ polyethyleneamines from Dow Chemical.

The copolymer of the invention may be reacted with an amine as is shown below.

Preparative Example of an esterified copolymer capped with an amine (Ecca): Each esterified copolymer from above is reacted with an amine in a flask fitted with a Dean-Stark trap capped with a condenser. Sufficient amine is added to provide the esterified copolymer with a weight percent nitrogen content as is shown in the table below. The amine is charged into the flask over a period of 30 minutes and stirred for 2-5 hours at 150 °C. The flask is cooled to 115 °C and drained. The resultant product is vacuum stripped at 100-150 °C and held for 1.5-2.5 hours. The procedure employs the materials listed in the table below. The table below presents the information for a representative number of esterified copolymers capped with an amine.

| Ecca | Esterified Copolymer | Amine | Nitrogen Content (wt %) |
|---|---|---|---|
| Ecca1 | Esc1 | Amine 1 | 0.1 |
| Ecca2 | Esc2 | Amine 1 | 0.25 |
| Ecca3 | Esc3 | Amine 1 | 0.25 |
| Ecca4 | Esc3 | Amine 1 | 0.4 |
| Ecca5 | Esc5 | Amine 2 | 0.1 |
| Ecca6 | Esc5 | Amine 2 | 0.25 |
| Ecca7 | Esc5 | Amine 2 | 0.4 |
| Ecca8 | Esc1 | Amine 2 | 0.1 |
| Ecca9 | Esc7 | Amine 2 | 0.1 |
| Ecca10 | Esc9 | Amine 2 | 0.25 |
| Ecca11 | Esc9 | Amine 3 | 0.15 |
| Ecca12 | Esc5 | Amine 3 | 0.375 |
| Ecca13 | Esc12 | Amine 3 | 0.6 |
| Ecca14 | Esc5 | Amine 1 | 0.1 |
| Ecca15 | Esc5 | Amine 1 | 0.25 |

| | | | |
|---|---|---|---|
| Footnote: Amine 1 is 4-(3-aminopropyl)morpholine Amine 2 is 3-(dimethylamino)-1-propylamine Amine 3 is 1-(3-aminopropyl) imidazole | | | |

The phosphate salt may be derivable from reacting an amine-functionalized esterified copolymer, wherein the esterified copolymer comprises units derived from monomers: (i) an α-olefin and (ii) an ethylenically unsaturated carboxylic acid or derivatives thereof, that are esterified with an alcohol, or mixtures thereof, and wherein at least a portion of carboxylic acid groups not esterified react with an amine (typically having TBN of greater than 0 mg KOH/g, or 1 to 20 mg KOH/g, or 2 to 12 mg KOH/g) with a (thio)phosphorylating agent.

In one embodiment the copolymer of the invention comprises (i) the α-olefin and (ii) an ethylenically unsaturated carboxylic acid or derivatives thereof (typically maleic anhydride), and (iii) one or more additional co-monomers that are known to copolymerize with the preceding monomers. Suitable co-monomers include vinyl aromatic monomers; alkyl meth(acrylates); vinyl acetate; and fumaric acid and derivatives thereof. The vinyl aromatic monomers include styrene or alkylstyrene (such as alpha-methylstyrene, para-tert-butylstyrene, alpha-ethylstyrene, and para-lower alkoxy styrene), or mixtures thereof. In one embodiment the vinyl aromatic monomer may be styrene.

### (Thio)-phosphating Agent

As used herein, the expression "(thio)phosphorylating agent" is meant to include a phosphorylating agent, a thiophosphorylating agent, or mixtures thereof. In one embodiment the phosphorylating agent does not contain sulphur. As used herein the expression "(thio)phosphorylating agent" may be used interchangeably with the expression "(thio)phosphating agent".

The (thio)phosphorylating agent which may be employed is typically phosphorus pentoxide, phosphorus pentasulphide, or reactive equivalents thereof. Reactive equivalents of thiophosphoric acid or phosphoric acid include acid halides, esters, amides, anhydrides, salts, partial salts, or mixtures thereof. The (thio)phosphorylating agent may have phosphorus in its +5 oxidation state.

Phosphorus pentoxide is usually referred to as P₂O₅, which is its empirical formula, and phosphorus pentasulphide is usually referred to as P₂S₅, which is its empirical formula, even though it is believed that both molecules consist at least in part of more complex molecules such as P₄O₁₀, or P₄S₁₀. The (thio)phosphorylating agent may include POCl₃, P₂O₅, P₄O₁₀, polyphosphoric acid, P₂S₅, or P₄S₁₀, or mixtures thereof. In one embodiment the (thio)phosphorylating agent may be a sulphur-free phosphating agent, typically POCl₃, P₂O₅, P₄O₁₀, or polyphosphoric acid.

The (thio)phosphate salt of the amine-functionalized copolymer, may also be a product obtained/obtainable by reacting: (i) a hydroxy-containing carboxylic compound (such as a hydroxy-containing carboxylic acid), or derivatives thereof (the derivative may include ester, amide, or partial salts of amide or ester, (typically partial ester), or a compound may be derived from a partially esterified polyol (such as glycerol)) and/or an alcohol (typically a monohydric alcohol, or a dihydric alcohol), a (thio)phosphorylating agent, and esterified ester copolymer capped with an amine. The resultant product may be referred to as an acid (thio)phosphate.

As used herein the expression "acid (thio)phosphate" is known to a person skilled in the art to include an acid thiophosphate or an acid phosphate (free of sulphur).

The acid (thio)phosphate which may be a product obtained/obtainable by reacting: a hydroxy-containing carboxylic compound, and/or an alcohol (typically a monohydric alcohol or a dihydric alcohol), a (thio)phosphorylating agent, and capped with amine having a basic nitrogen. The amine having a basic nitrogen when incorporated into the product may have a total base number (TBN) of greater than 0 mg KOH/g, or 1 to 20 mg KOH/g, or 2 to 12 mg KOH/g.

In one embodiment the (thio)phosphate salt may be an acid (thio)phosphate which may be a product obtained/obtainable by reacting: (i) a hydroxy-containing carboxylic acid, or derivatives thereof and a (thio)phosphorylating agent, and capped with amine having a basic nitrogen.

In one embodiment the (thio)phosphate salt may be an acid (thio)phosphate which may be a product obtained/obtainable by reacting: (i) an alcohol (typically a monohydric alcohol or a dihydric alcohol) and a (thio)phosphorylating agent, and capped with amine having a basic nitrogen.

The (thio)phosphorylating agent may be mixed with and reacted with the hydroxy-containing carboxylic compound, and or alcohol in any order.

The (thio)phosphorylating agent itself may also be introduced into the reaction mixture in a single portion, or it may be introduced in multiple portions. Thus, in one embodiment an acid (thio)phosphate product (or intermediate) is prepared wherein a portion of the (thio)phosphorylating agent is reacted the hydroxy-containing carboxylic compound, and/or the alcohol and thereafter a second charge of the (thio)phosphating agent is added.

In one embodiment the (thio)phosphate salt of an amine-functionalized copolymer may be obtained/obtainable by reacting the product of (i) with esterified ester copolymer capped with amine having basic nitrogen. The product may be a polymer bound alkylammonium salt of a (thio)phosphate ester of the hydroxy-containing carboxylic compound, typically a (thio)phosphate ester derivative. For example the product may be an alkyl hydroxy-carboxylate (thio)phosphate polymer bound trialkyl ammonium salt, or mixtures thereof. The trialkyl ammonium salt may be derived from an amine having a tertiary amino group as described below.

In one embodiment the present invention provides a lubricating composition comprising an oil of lubricating viscosity and a (thio)phosphate salt of an amine-functionalized copolymer obtained/obtainable by reacting: (i) an alcohol (typically a monohydric alcohol or a dihydric alcohol), or derivatives thereof, a (thio)phosphorylating agent, and in the absence of a hydroxy-containing carboxylic compound (typically a hydroxy-containing carboxylic acid), and optionally (ii) reacting the product of (i) with an esterified ester copolymer capped with an amine having a basic nitrogen.

In one embodiment the present invention provides a lubricating composition comprising an oil of lubricating viscosity and a (thio)phosphate salt of an amine-functionalized copolymer obtained/obtainable by reacting: (i) a hydroxy-containing carboxylic compound (typically a hydroxy-containing carboxylic acid, or derivatives thereof), a (thio)phosphorylating agent, and an alcohol (typically a monohydric alcohol, or a dihydric alcohol), and optionally (ii) reacting the product of (i) with an amine, or mixtures thereof. In one embodiment the invention provides a lubricating composition, wherein the product of (i) is further reacted with an amine, or mixtures thereof.

In one embodiment the present invention provides a lubricating composition comprising an oil of lubricating viscosity and a (thio)phosphate salt of an amine-functionalized esterified copolymer, wherein the esterified copolymer comprises units derived from monomers: (i) an α-olefin and (ii) an ethylenically unsaturated carboxylic acid or derivatives thereof (typically carboxylic acid groups or an anhydride), that are esterified with an alcohol, or mixtures thereof, and wherein at least a portion of carboxylic acid groups not esterified react with an amine, wherein the (thio)phosphate salt is obtained/obtainable by reacting: a hydroxy-containing carboxylic compound (typically a hydroxy-containing carboxylic acid, or derivatives thereof), a (typically sulphur-free) phosphating agent, and optionally an alcohol.

The resultant product may then be reacted with the amine of the esterified copolymer described herein.

In one embodiment the hydroxy-containing carboxylic compound may be a hydroxy-carboxylic acid, or derivatives thereof, a partially esterified polyol, or mixtures thereof.

The hydroxy-containing carboxylic compound may include a compound derived from a hydroxy-containing carboxylic acid represented by the formulae: 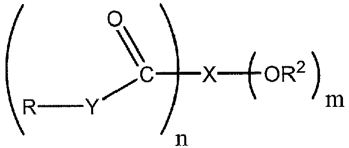 or 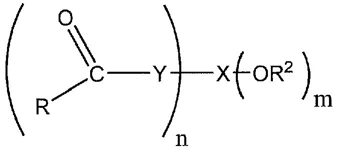 wherein
n and m may be independently integers of 1 to 5;
X may be an aliphatic or alicyclic group, or an aliphatic or alicyclic group containing an oxygen atom in the carbon chain, or a substituted group of the foregoing types, said group containing up to 6 carbon atoms and having n+m available points of attachment;
each Y may be independently -O-, >NH, or >NR¹ or two Ys together representing the nitrogen of an imide structure R-N< formed between two carbonyl groups; and
each R and R¹ may be independently hydrogen or a hydrocarbyl group, provided that at least one R or R¹ group is a hydrocarbyl group; each R² may be independently hydrogen, a hydrocarbyl group or an acyl group, further provided that at least one -OR² group is located on a carbon atom within X that is α or β to at least one of the -C(O)-Y-R groups, with the proviso that at least one R² group is hydrogen.

The compound derived from the hydroxy-carboxylic compound may be derived from glycolic acid (n and m both equal 1), malic acid (n = 2, m = 1), tartaric acid (n and m both equal 2), citric acid (n = 3, m = 1), or mixtures thereof. In one embodiment the compound derived from the hydroxy-carboxylic compound may be derived from tartaric acid or glycolic acid, typically tartaric acid.

The compound (II) derived from the hydroxy-containing carboxylic acid may be derived from a partially esterified polyol (such as glycerol), or mixtures thereof. The partially esterified polyol may be glycerol monooleate, or glycerol dioleate.

The alcohol is reacted with the (thio)phosphating agent. The alcohol includes the monohydric alcohol, or the dihydric alcohol. The carbon atoms of the alcohol may be in linear chains, branched chains, or mixtures thereof. When branched, the alcohol may be a Guerbet alcohol, or mixtures thereof. A branched alcohol may contain 6 to 40 or 6 to 30, or 8 to 20 carbon atoms (typically 8 to 20 carbon atoms).

The Guerbet alcohols have been described previously.

Examples of a suitable branched alcohol include 2-ethylhexanol, 2-butyloctanol, 2-hexyldecanol, 2-octyldodecanol, 2-decyltetradecanol, isotridecanol, iso-octyl, Guerbet alcohols, or mixtures thereof.

Examples of a monohydric alcohol include methanol, ethanol, propanol, butanol, pentanol, hexanol, heptanol, octanol, nonanol, decanol, undecanol, dodecanol, tridecanol, tetradecanol, pentadecanol, hexadecanol, heptadecanol, octadecanol, nonadecanol, eicosanol, or mixtures thereof. In one embodiment the monohydric alcohol contains 6 to 30, or 8 to 20, or 8 to 15 carbon atoms (typically 8 to 15 carbon atoms).

The alcohol may include commercially available materials such as Oxo Alcohol® 7911, Oxo Alcohol® 7900 and Oxo Alcohol® 1100 of Monsanto; Alphanol® 79 of ICI; Nafol® 1620, Alfol® 610 and Alfol® 810 of Condea (now Sasol); Epal® 610 and Epal® 810 of Ethyl Corporation (now Afton); Linevol® 79, Linevol® 911 and Dobanol® 25 L of Shell AG; Lial® 125 of Condea Augusta, Milan; Dehydad® and Lorol® of Henkel KGaA (now Cognis) as well as Linopol® 7-11 and Acropol® 91 of Ugine Kuhlmann.

The dihydric alcohol may include an alkylene diol, or mixtures thereof. The alkane diol may be in a 1,2- or 1,3- or 1,4- arrangement. For example alkane diol hydroxyl groups may be attached to adjacent carbon atoms (i.e., 1,2- or a vicinal diol).

Examples of the alkylene diol include ethylene glycol, 1,2-propylene glycol, 1,2-butylene glycol; also 1,3-propylene diol, 1,3-butylene diol, 1,4-butylene diol, 1,2-hexylene diol, 1,2-dodecylene diol, and 1,2-octadecylene diol.

In one embodiment the hydroxy-containing carboxylic acid and/or the alcohol, or derivatives thereof, the (thio)phosphorylating agent may be reacted at a temperature in the range of 30 °C to 100 °C, or 50 °C to 90 °C. The reaction may form a mono- or di- phosphate ester.

The reaction of the esterified copolymer and an amine in step (ii) may be carried out at a temperature in the range of 30 °C to 120 °C, or 40 °C to 90 °C.

In one embodiment the hydroxy-containing carboxylic acid and/or the alcohol, or derivatives thereof, the (thio)phosphorylating agent may be reacted at a temperature in the range of 30 °C to 100 °C, or 50 °C to 90 °C in the presence of the esterified copolymer amine. The reaction may form a mono- or diphosphate ester.

The relative amounts of the hydroxy-containing carboxylic acid, or derivatives thereof to the alcohol may be 1:0 to 0:1, or 0.8:0.2 to 0.2:0.8. At a 1:1 mole ratio of the hydroxy-containing carboxylic acid, or derivatives thereof having 2 or more hydroxyl groups to the alcohol (typically a monohydric alcohol, or a dihydric alcohol), the mole ratio of hydroxyl groups will be >1:1.

The hydroxy-containing carboxylic acid, or derivatives thereof (and optionally the monohydric alcohol or dihydric alcohol) are reacted with the (thio)phosphorylating agent in such overall amounts that the product mixture formed thereby contains (thio)phosphorus acid functionality. That is, the (thio)phosphorylating agent is not completely converted to its ester form but will retain at least a portion of P-OH, or P-SH acidic functionality, which is accomplished by using a sufficient amount of the (thio)phosphorylating agent compared with the equivalent amounts of the hydroxy-containing carboxylic acid, or derivatives thereof (and optionally the alcohol). In particular, in certain embodiments the (thio)phosphorylating agent (which may comprise phosphorus pentoxide), may be reacted with the hydroxy-containing carboxylic acid, or derivatives thereof (and optionally the alcohol) in a ratio of 1:2.5 moles (or 1.25:2 moles) of hydroxyl groups per 1 mole of phosphorus from the (thio)phosphorylating agent.

In one somewhat oversimplified schematic representation using P₂O₅ for illustrative purposes, the reaction of the phosphating agent with alcohol(s) may be represented as follows:

3 ROH + P₂O₅ → (RO)₂P(=O)OH + RO-P(=O)(OH)₂

where ROH represent hydroxyl groups of either (i) a hydroxy-containing carboxylic compound, or derivatives thereof, (ii) a monoalcohol, (iii) a mixture of a monool and diol, or (iv) a mixture of the hydroxy-containing carboxylic acid, or derivatives thereof with an alcohol (typically a monohydric alcohol, or a dihydric alcohol). As will be seen below, the residual phosphoric acidic functionality may be reacted at least in part with an amine.

The amine may be reacted with the copolymer described above. The incorporated amine having basic nitrogen may contain a secondary or tertiary amino group (typically a tertiary amino group). The incorporated amine may for instance include dimethylaminopropylamine, N,N-dimethyl-aminopropylamine, N,N-diethyl-aminopropylamine, N,N-dimethyl-aminoethylamine, ethylenediamine, 1,2-propylenediamine, 1,3-propylene diamine, the isomeric butylenediamines, pentanediamines, hexanediamines, heptanediamines, diethylenetriamine, dipropylenetriamine, dibutylenetriamine, triethylenetetraamine, tetraethylenepentaamine, pentaethylenehexaamine, hexamethylene-heptaamine, and bis(hexamethylene) triamine, 3,3-diamino-N-methyl-dipropylamine, or 3'3-aminobis(N,N-dimethylpropylamine)or mixtures thereof.

The amine having basic nitrogen may in one embodiment be dimethylaminopropylamine, N,N-dimethyl-aminopropylamine, N,N-diethylaminopropylamine, N,N-dimethyl-aminoethylamine ethylenediamine, 1,2-propylenediamine, or mixtures thereof.

The amine having basic nitrogen may be substituted heterocyclic compounds such as 1-(3-aminopropyl)imidazole, 4-(3-aminopropyl)morpholine, 1-(2-aminoethyl)piperidine, 1-(3-aminopropyl)-2-pipecoline, 1-ethyl-(4-methylamino)piperidine, 4-(1-pyrrolidinyl)piperidine, 1-(2-aminoethyl)-pyrrolidine, 2-(2-aminoethyl)-1-methylpyrrolidine, or mixtures thereof.

The amine having basic nitrogen may optionally include oxygen. The amine of this type may include an alkanolamine such as N,N-dimethylaminopropanol, N,N-diethylaminopropanol, N,N-diethylaminobutanol, or mixtures thereof.

The amine having basic nitrogen may also include amines having (a tertiary amino group. Amines of this type include N,N-diethylethylenediamine, N,N-dimethylethylenediamine, N,N-dibutylethylenediamine, N,N-diethyl-1,3-diaminopropane, N,N-dimethyl-1,3-diaminopropane, N,N,N'-trimethylethylene-diamine, N,N-dimethyl-N'-ethylethylenediamine, N,N-diethyl-N'-methyl-ethylenediamine, N,N,N'-triethylethylenediamine, 3-dimethylaminopropylamine, 3-diethylaminopropylamine, 3-dibutylaminopropylamine, N,N,N'-trimethyl-1,3-propanediamine,N,N,2,2-tetramethyl-1,3-propanediamine, 2-amino-5-diethyl-aminopentane, N,N,N',N'-tetraethyldiethylenetriamine, 3,3'-diamino-N-methyl-dipropylamine, 3,3'-iminobis(N,N-dimethylpropylamine), or mixtures thereof. In one particular embodiment the amine having basic nitrogen may be N,N-dimethyl-1,3-diaminopropane, N,N-diethyl-1,3-diaminopropane, N,N-dimethylethylenediamine, N,N-diethylethylenediamine, N,N-dibutylethylenediamine, or mixtures thereof.

### Oils of Lubricating Viscosity

The lubricating composition comprises an oil of lubricating viscosity. Such oils include natural and synthetic oils, oil derived from hydrocracking, hydrogenation, and hydrofinishing, unrefined, refined, re-refined oils or mixtures thereof. A more detailed description of unrefined, refined and re-refined oils is provided in International Publication WO2008/147704, paragraphs [0054] to [0056] (a similar disclosure is provided in US Patent Application 2010/197536, see [0072] to [0073]). A more detailed description of natural and synthetic lubricating oils is described in paragraphs [0058] to [0059] respectively of WO2008/147704 (a similar disclosure is provided in US Patent Application 2010/197536, see [0075] to [0076]). Synthetic oils may also be produced by Fischer-Tropsch reactions and typically may be hydroisomerised Fischer-Tropsch hydrocarbons or waxes. In one embodiment oils may be prepared by a Fischer-Tropsch gas-to-liquid synthetic procedure as well as other gas-to-liquid oils.

Oils of lubricating viscosity may also be defined as specified in April 2008 version of "Appendix E - API Base Oil Interchangeability Guidelines for Passenger Car Motor Oils and Diesel Engine Oils", section 1.3 Sub-heading 1.3. "Base Stock Categories". The API Guidelines are also summarised in US Patent US 7,285,516 (see column 11, line 64 to column 12, line 10). In one embodiment the oil of lubricating viscosity may be an API Group II, Group III, Group IV oil, or mixtures thereof.

The amount of the oil of lubricating viscosity present is typically the balance remaining after subtracting from 100 wt % the sum of the amount of the copolymer of the invention and the other performance additives.

The lubricating composition may be in the form of a concentrate and/or a fully formulated lubricant. If the copolymer of the present invention is in the form of a concentrate (which may be combined with additional oil to form, in whole or in part, a finished lubricant), the ratio of the of components the copolymer of the present invention to the oil of lubricating viscosity and/or to diluent oil include the ranges of 1:99 to 99:1 by weight, or 80:20 to 10:90 by weight.

### Other Performance Additives

Compositions derived from the copolymer and/or lubricating compositions described herein optionally further includes other performance additives. The other performance additives comprise at least one of metal deactivators, detergents, dispersants, viscosity modifiers (other than the copolymer of the present invention), friction modifiers, corrosion inhibitors, dispersant viscosity modifiers (other than the copolymer of the present invention), antiwear agents (other than the copolymer of the present invention), extreme pressure agents (other than the copolymer of the present invention), antiscuffing agents, antioxidants, foam inhibitors, demulsifiers, pour point depressants, seal swelling agents and mixtures thereof. Typically, fully-formulated lubricating oil will contain one or more of these performance additives.

### Dispersants

Dispersants are often known as ashless-type dispersants because, prior to mixing in a lubricating oil composition, they do not contain ash-forming metals and they do not normally contribute any ash forming metals when added to a lubricant and polymeric dispersants. Ashless type dispersants are characterised by a polar group attached to a relatively high molecular weight hydrocarbon chain. Typical ashless dispersants include N-substituted long chain alkenyl succinimides. Examples of N-substituted long chain alkenyl succinimides include polyisobutylene succinimide with number average molecular weight of the polyisobutylene from which it is derived in the range 350 to 5000, or 500 to 3000.

In one embodiment the invention further includes at least one dispersant derived from polyisobutylene, an amine and zinc oxide to form a polyisobutylene succinimide complex with zinc. The polyisobutylene succinimide complex with zinc may be used alone or in combination.

Another class of ashless dispersant is Mannich bases. Mannich dispersants are the reaction products of alkyl phenols with aldehydes (especially formaldehyde) and amines (especially polyalkylene polyamines). The alkyl group typically contains at least 30 carbon atoms.

The dispersants may also be post-treated by conventional methods by a reaction with any of a variety of agents. Among these are boron compounds (such as boric acid), urea, thiourea, dimercaptothiadiazoles, carbon disulphide, aldehydes, ketones, carboxylic acids such as terephthalic acid, hydrocarbon-substituted succinic anhydrides, maleic anhydride, nitriles, epoxides, and phosphorus compounds. In one embodiment the post-treated dispersant is borated.

In one embodiment the dispersant may be a post treated dispersant. The dispersant may be post treated with dimercaptothiadiazole, optionally in the presence of one or more of a phosphorus compound, a dicarboxylic acid of an aromatic compound, and a borating agent.

In one embodiment the post treated dispersant may be formed by heating an alkenyl succinimide or succinimide detergent with a phosphorus ester and water to partially hydrolyze the ester. The post treated dispersant of this type is disclosed for example in U.S. Patent 5,164,103.

In one embodiment the post treated dispersant may be produced by preparing a mixture of a dispersant and a dimercaptothiadiazole and heating the mixture above about 100°C. The post treated dispersant of this type is disclosed for example in U.S. Patent 4,136,043.

In one embodiment the dispersant may be post treated to form a product prepared comprising heating together: (i) a dispersant (typically a succinimide), (ii) 2,5-dimercapto-1,3,4-thiadiazole or a hydrocarbyl-substituted 2,5-dimercapto-1,3,4-thiadiazole, or oligomers thereof, (iii) a borating agent (similar to those described above); and (iv) optionally a dicarboxylic acid of an aromatic compound selected from the group consisting of 1,3 diacids and 1,4 diacids (typically terephthalic acid), or (v) optionally a phosphorus acid compound (including either phosphoric acid or phosphorous acid), said heating being sufficient to provide a product of (i), (ii), (iii) and optionally (iv) or optionally (v), which is soluble in an oil of lubricating viscosity. The post treated dispersant of this type is disclosed for example in International Application WO 2006/654726 A.

Examples of a suitable dimercaptothiadiazole include 2,5-dimercapto-1,3,4-thiadiazole or a hydrocarbyl-substituted 2,5-dimercapto-1,3,4-thiadiazole. In several embodiments the number of carbon atoms on the hydrocarbyl-substituent group includes 1 to 30, 2 to 25, 4 to 20, or 6 to 16. Examples of suitable 2,5-bis(alkyl-dithio)-1,3,4-thiadiazoles include 2,5-bis(tert-octyldithio)-1,3,4-thiadiazole 2,5-bis(tert-nonyldithio)-1,3,4-thiadiazole, 2,5-bis(tert-decyldithio)-1,3,4-thiadiazole, 2,5-bis(tert-undecyldithio)-1,3,4-thiadiazole, 2,5-bis(tert-dodecyldithio)-1,3,4-thiadiazole, 2,5-bis(tert-tridecyldithio)-1,3,4-thiadiazole, 2,5-bis(tert-tetradecyldithio)-1,3,4-thiadiazole, 2,5-bis(tert-pentadecyldithio)-1,3,4-thiadiazole, 2,5-bis(tert-hexadecyldithio)-1,3,4-thiadiazole, 2,5-bis(tert-heptadecyldithio)-1,3,4-thiadiazole, 2,5-bis(tert-octadecyldithio)-1,3,4-thiadiazole, 2,5-bis(tert-nonadecyldithio)-1,3,4-thiadiazole or 2,5-bis(tert-eicosyldithio)-1,3,4-thiadiazole, or oligomers thereof.

### Detergents

The lubricant composition optionally further includes known neutral or overbased detergents, i.e., ones prepared by conventional processes known in the art. Suitable detergent substrates include, phenates, sulphur containing phenates, sulphonates, salixarates, salicylates, carboxylic acid, phosphorus acid, alkyl phenol, sulphur coupled alkyl phenol compounds, or saligenins.

### Antioxidant

Antioxidant compounds are known and include sulphurised olefins, diarylamine alkylated diarylamines, hindered phenols, molybdenum dithiocarbamates, and mixtures thereof. Antioxidant compounds may be used alone or in combination.

The hindered phenol antioxidant often contains a secondary butyl and/or a tertiary butyl group as a sterically hindering group. The phenol group is often further substituted with a hydrocarbyl group and/or a bridging group linking to a second aromatic group. Examples of suitable hindered phenol antioxidants include 2,6-di-tert-butylphenol, 4-methyl-2,6-di-tert-butylphenol, 4-ethyl-2,6-di-tert-butylphenol, 4-propyl-2,6-di-tert-butylphenol or 4-butyl-2,6-di-tert-butylphenol, or 4-dodecyl-2,6-di-tert-butylphenol. In one embodiment the hindered phenol antioxidant is an ester and may include, e.g., Irganox™ L-135 from Ciba. Suitable examples of molybdenum dithiocarbamates which may be used as an antioxidant include commercial materials sold under the trade names such as Vanlube 822™ and Molyvan™ A from R. T. Vanderbilt Co., Ltd., and Adeka Sakura-Lube™ S-100, S-165 and S-600 from Asahi Denka Kogyo K. K and mixtures thereof.

The diarylamine alkylated diarylamine may be a phenyl-α-naphthylamine (PANA), an alkylated diphenylamine, or an alkylated phenylnapthylamine, or mixtures thereof. The alkylated diphenylamine may include di-nonylated diphenylamine, nonyl diphenylamine, octyl diphenylamine, di-octylated diphenylamine, di-decylated diphenylamine, decyl diphenylamine and mixtures thereof. In one embodiment the diphenylamine may include nonyl diphenylamine, dinonyl diphenylamine, octyl diphenylamine, dioctyl diphenylamine, or mixtures thereof. In one embodiment the diphenylamine may include nonyl diphenylamine, or dinonyl diphenylamine. The alkylated diarylamine may include octyl, di-octyl, nonyl, di-nonyl, decyl or di-decyl phenylnapthylamines.

### Viscosity Modifiers

The lubricating composition optionally further includes at least one viscosity modifier other than the product of the present invention. The viscosity modifier may include hydrogenated styrene-butadiene rubbers, ethylene-propylene copolymers, hydrogenated styrene-isoprene polymers, hydrogenated diene polymers, polyalkyl styrenes, polyolefins, polyalkyl (meth)acrylates, esters of maleic anhydride-styrene copolymers, or mixtures thereof. In one embodiment the polymeric viscosity modifier may be a poly(meth)acrylate, or mixtures thereof.

### Antiwear Agent

The lubricating composition optionally further includes at least one antiwear agent other than the product of the present invention. Examples of suitable antiwear agents include oil soluble amine salts of phosphorus compounds, sulphurised olefins, metal dihydrocarbyldithiophosphates (such as zinc dialkyldithiophosphates), thiocarbamate-containing compounds, such as thiocarbamate esters, thiocarbamate amides, thiocarbamic ethers, alkylene-coupled thiocarbamates, and bis(S-alkyldithiocarbamyl) disulphides.

In one embodiment the oil soluble phosphorus amine salt antiwear agent includes an amine salt of a phosphorus acid ester or mixtures thereof. The amine salt of a phosphorus acid ester includes phosphoric acid esters and amine salts thereof; dialkyldithiophosphoric acid esters and amine salts thereof; amine salts of phosphites; and amine salts of phosphorus-containing carboxylic esters, ethers, and amides; and mixtures thereof. The amine salt of a phosphorus acid ester may be used alone or in combination.

In one embodiment the oil soluble phosphorus amine salt includes partial amine salt-partial metal salt compounds or mixtures thereof. In one embodiment the phosphorus compound further includes a sulphur atom in the molecule. In one embodiment the amine salt of the phosphorus compound is ashless, i.e., metal-free (prior to being mixed with other components).

The amines which may be suitable for use as the amine salt include primary amines, secondary amines, tertiary amines, and mixtures thereof. The amines include those with at least one hydrocarbyl group, or, in certain embodiments, two or three hydrocarbyl groups. The hydrocarbyl groups may contain 2 to 30 carbon atoms, or in other embodiments 8 to 26, or 10 to 20, or 13 to 19 carbon atoms.

Primary amines include ethylamine, propylamine, butylamine, 2-ethylhexylamine, octylamine, and dodecylamine, as well as such fatty amines as n-octylamine, n-decylamine, n-dodecylamine, n-tetradecylamine, n-hexadecylamine, n-octadecylamine and oleyamine. Other useful fatty amines include commercially available fatty amines such as "Armeen®" amines (products available from Akzo Chemicals, Chicago, Illinois), such as Armeen C, Armeen O, Armeen OL, Armeen T, Armeen HT, Armeen S and Armeen SD, wherein the letter designation relates to the fatty group, such as coco, oleyl, tallow, or stearyl groups.

Examples of suitable secondary amines include dimethylamine, diethylamine, dipropylamine, dibutylamine, diamylamine, dihexylamine, diheptylamine, methylethylamine, ethylbutylamine and ethylamylamine. The secondary amines may be cyclic amines such as piperidine, piperazine and morpholine.

The amine may also be a tertiary-aliphatic primary amine. The aliphatic group in this case may be an alkyl group containing 2 to 30, or 6 to 26, or 8 to 24 carbon atoms. Tertiary alkyl amines include monoamines such as tert-butylamine, tert-hexylamine, 1-methyl-1-amino-cyclohexane, tert-octylamine, tert-decylamine, tertdodecylamine, tert-tetradecylamine, tert-hexadecylamine, tert-octadecylamine, tert-tetracosanylamine, and tert-octacosanylamine.

In one embodiment the phosphorus acid amine salt includes an amine with C11 to C14 tertiary alkyl primary groups or mixtures thereof. In one embodiment the phosphorus acid amine salt includes an amine with C14 to C18 tertiary alkyl primary amines or mixtures thereof. In one embodiment the phosphorus acid amine salt includes an amine with C18 to C22 tertiary alkyl primary amines or mixtures thereof.

Mixtures of amines may also be used in the invention. In one embodiment a useful mixture of amines is "Primene® 81R" and "Primene® JMT." Primene® 81R and Primene® JMT (both produced and sold by Rohm & Haas) are mixtures of C11 to C14 tertiary alkyl primary amines and C18 to C22 tertiary alkyl primary amines respectively.

In one embodiment oil soluble amine salts of phosphorus compounds include a sulphur-free amine salt of a phosphorus-containing compound which is obtained/obtainable by a process comprising: reacting an amine with either (i) a hydroxy-substituted di-ester of phosphoric acid, or (ii) a phosphorylated hydroxy-substituted di- or tri- ester of phosphoric acid. A more detailed description of compounds of this type is disclosed in International Application PCT/US08/051126 (or equivalent to US Application 11/627405).

In one embodiment the hydrocarbyl amine salt of an alkylphosphoric acid ester is the reaction product of a C14 to C18 alkyl phosphoric acid with Primene 81R™ (produced and sold by Rohm & Haas) which is a mixture of C11 to C14 tertiary alkyl primary amines.

Examples of hydrocarbyl amine salts of dialkyldithiophosphoric acid esters include the reaction product(s) of isopropyl, methyl-amyl (4-methyl-2-pentyl or mixtures thereof), 2-ethylhexyl, heptyl, octyl or nonyl dithiophosphoric acids with ethylene diamine, morpholine, or Primene 81R™, and mixtures thereof.

In one embodiment the dithiophosphoric acid may be reacted with an epoxide or a glycol. This reaction product is further reacted with a phosphorus acid, anhydride, or lower ester. The epoxide includes an aliphatic epoxide or a styrene oxide. Examples of useful epoxides include ethylene oxide, propylene oxide, butene oxide, octene oxide, dodecene oxide, and styrene oxide. In one embodiment the epoxide is propylene oxide. The glycols may be aliphatic glycols having from 1 to 12, or from 2 to 6, or 2 to 3 carbon atoms. The dithiophosphoric acids, glycols, epoxides, inorganic phosphorus reagents and methods of reacting the same are described in U.S. Patent numbers 3,197,405 and 3,544,465. The resulting acids may then be salted with amines. An example of suitable dithiophosphoric acid is prepared by adding phosphorus pentoxide (about 64 grams) at 58 °C over a period of 45 minutes to 514 grams of hydroxypropyl O,O-di(4-methyl-2-pentyl)phosphorodithioate (prepared by reacting di(4-methyl-2-pentyl)-phosphorodithioic acid with 1.3 moles of propylene oxide at 25 °C). The mixture is heated at 75 °C for 2.5 hours, mixed with a diatomaceous earth and filtered at 70 °C. The filtrate contains 11.8% by weight phosphorus, 15.2% by weight sulphur, and an acid number of 87 (bromophenol blue).

The dithiocarbamate-containing compounds may be prepared by reacting a dithiocarbamate acid or salt with an unsaturated compound. The dithiocarbamate containing compounds may also be prepared by simultaneously reacting an amine, carbon disulphide and an unsaturated compound. Generally, the reaction occurs at a temperature from 25 °C to 125 °C.

Examples of suitable olefins that may be sulphurised to form an the sulphurised olefin include propylene, butylene, isobutylene, pentene, hexane, heptene, octane, nonene, decene, undecene, dodecene, undecyl, tridecene, tetradecene, pentadecene, hexadecene, heptadecene, octadecene, octadecenene, nonodecene, eicosene or mixtures thereof. In one embodiment, hexadecene, heptadecene, octadecene, octadecenene, nonodecene, eicosene or mixtures thereof and their dimers, trimers and tetramers are especially useful olefins. Alternatively, the olefin may be a Diels-Alder adduct of a diene such as 1,3-butadiene and an unsaturated ester such as butyl acrylate.

Another class of sulphurised olefin includes fatty acids and their esters. The fatty acids are often obtained from vegetable oil or animal oil; and typically contain 4 to 22 carbon atoms. Examples of suitable fatty acids and their esters include triglycerides, oleic acid, linoleic acid, palmitoleic acid or mixtures thereof. Often, the fatty acids are obtained from lard oil, tall oil, peanut oil, soybean oil, cottonseed oil, sunflower seed oil or mixtures thereof. In one embodiment fatty acids and/or ester are mixed with olefins.

In an alternative embodiment, the antiwear agent may be a monoester of a polyol and an aliphatic carboxylic acid as described above. In one embodiment the monoester of a polyol and an aliphatic carboxylic acid may include glycerol monooleate, or mixtures thereof.

### Antiscuffing Agent

The lubricant composition may also contain an antiscuffing agent. Antiscuffing agent compounds are believed to decrease adhesive wear and are often sulphur containing compounds. Typically the sulphur containing compounds include sulphurised olefins, organic sulphides and polysulphides, such as dibenzyldisulphide, bis-(chlorobenzyl) disulphide, dibutyl tetrasulphide, di-tertiary butyl polysulphide, sulphurised methyl ester of oleic acid, sulphurised alkylphenol, sulphurised dipentene, sulphurised terpene, sulphurised Diels-Alder adducts, alkyl sulphenyl N'N-dialkyl dithiocarbamates, the reaction product of polyamines with polybasic acid esters, chlorobutyl esters of 2,3-dibromopropoxyisobutyric acid, acetoxymethyl esters of dialkyl dithiocarbamic acid and acyloxyalkyl ethers of xanthogenic acids and mixtures thereof.

### Extreme Pressure Agents

Extreme Pressure (EP) agents that are soluble in the oil include sulphur- and chlorosulphur-containing EP agents, chlorinated hydrocarbon EP agents and phosphorus EP agents. Examples of such EP agents include chlorinated wax; sulphurised olefins (such as sulphurised isobutylene), organic sulphides and polysulphides such as dibenzyldisulphide, bis-(chlorobenzyl) disulphide, dibutyl tetrasulphide, sulphurised methyl ester of oleic acid, sulphurised alkylphenol, sulphurised dipentene, sulphurised terpene, and sulphurised Diels-Alder adducts; phosphosulphurised hydrocarbons such as the reaction product of phosphorus sulphide with turpentine or methyl oleate; phosphorus esters such as the dihydrocarbon and trihydrocarbon phosphites, e.g., dibutyl phosphite, diheptyl phosphite, dicyclohexyl phosphite, pentylphenyl phosphite; dipentylphenyl phosphite, tridecyl phosphite, distearyl phosphite and polypropylene substituted phenol phosphite; metal thiocarbamates such as zinc dioctyldithiocarbamate and barium heptylphenol diacid; amine salts of alkyl and dialkylphosphoric acids or derivatives including, for example, the amine salt of a reaction product of a dialkyldithiophosphoric acid with propylene oxide and subsequently followed by a further reaction with P₂O₅; and mixtures thereof (as described in US 3,197,405).

Corrosion inhibitors that may be useful in the compositions of the invention include fatty amines, octylamine octanoate, condensation products of dodecenyl succinic acid or anhydride and a fatty acid such as oleic acid with a polyamine.

Foam inhibitors that may be useful in the compositions of the invention include copolymers of ethyl acrylate and 2-ethylhexylacrylate and optionally vinyl acetate; demulsifiers including trialkyl phosphates, polyethylene glycols, polyethylene oxides, polypropylene oxides and (ethylene oxide-propylene oxide) polymers.

Pour point depressants that may be useful in the compositions of the invention include polyalphaolefins, esters of maleic anhydride-styrene copolymers, poly(meth)acrylates, polyacrylates or polyacrylamides.

As used herein the term "fatty alkyl" or "fatty" in relation to friction modifiers means a carbon chain having 10 to 22 carbon atoms, typically a straight carbon chain.

Friction modifiers that may be useful in the compositions of the invention include fatty acid derivatives such as fatty amines, esters, epoxides, fatty imidazolines, condensation products of carboxylic acids and polyalkylenepolyamines and amine salts of alkylphosphoric acids, fatty phosphonate esters and reaction products from fatty carboxylic acids reacted with guanidine, aminoguanidine, urea, thiourea, and salts thereof.

### Industrial Application

The method and lubricating composition of the invention may be utilised in refrigeration lubricants, greases, gear oils, axle oils, drive shaft oils, traction oils, manual transmission oils, automatic transmission oils, metal working fluids, hydraulic oils, or internal combustion engine oils. The gear oils, axle oils, drive shaft oils, manual transmission oils, automatic transmission oils may be collectively referred to as being used as part of a driveline device.

In one embodiment the method and lubricating composition of the invention may be for at least one of gear oils, axle oils, drive shaft oils, traction oils, manual transmission oils or automatic transmission oils.

An automatic transmission includes continuously variable transmissions (CVT), infinitely variable transmissions (IVT), toroidal transmissions, continuously slipping torque converter clutches (CSTCC), stepped automatic transmissions or dual clutch transmissions (DCT).

The gear oil or axle oil may be used in a planetary hub reduction axle, a mechanical steering and transfer gear box in a utility vehicle, a synchromesh gear box, a power take-off gear, a limited slip axle, and a planetary hub reduction gear box.

In one embodiment the copolymer of the invention in an axle oil provides antifoam performance.

In several embodiments a suitable lubricating composition includes the copolymer present (on an actives basis) in ranges as shown in the following table.

**Table**

| Embodiments | wt % of Copolymer of the Invention | wt % of Other Performance Additives | wt % of Oil of Lubricating Viscosity |
|---|---|---|---|
| A | 0.1-70 | 0.5-20 | 10-99.4 |
| B | 1.5-65 | 0.5-15 | 20-98 |
| C | 10-60 | 0.5-15 | 25-89.5 |
| D | 15-60 | 0.5-15 | 25-84.5 |
| E | 18-46 | 0.5-15 | 39-81.5 |

In different embodiments the copolymer of the invention may be present at 1 wt % to 70 wt %, or 1.5 wt % to 65 wt %, or 10 wt % to 60 wt %, or 15 wt % to 60 wt %, or 18 wt % to 46 wt %.

The following examples provide an illustration of the invention. These examples are non exhaustive and are not intended to limit the scope of the invention.

### EXAMPLES

Polymer intermediate 1: A 5 L flange flask is charged with 353 g of maleic anhydride, 606 g of 1-dodecene, and toluene (2372.8 g). The flask is fitted with a flange lid and clip, PTFE stirrer gland, rod and overhead stirrer, water-cooled condenser, thermocouple and nitrogen inlet. The flask is stirred under nitrogen. Trigonox®21S and toluene (315 g) are charged to a conical flask with side-arm and nitrogen is applied. The flask is heated to 105 °C. The contents of the conical flask are charged to the flange flask via Masterflex™ pump (flow rate = 1.2 ml/min⁻¹) over a period of 5 hours. The flask is cooled to 50 °C. A Dean-Stark trap is fitted to the flask and the flask is heated to 120 °C to remove toluene before alcohol addition. The flask is cooled to 110 °C. Alfol®810 (417.6 g) and Isofol®16 (2-hexyl-1-decanol, 174 g) are mixed and charged to the flask over 1.5 hours via dropping funnel. Alfol 810 (522 g) and methanesulphonic acid (24.7 g) are mixed together and charged to the flask via dropping funnel over 1.5 hours whilst heating to 145°C. The flask is stirred for 2 hours before cooling to ambient. The flask is heated to 145°C. The flask is stirred for a further 8 hours. A second methanesulphonic acid addition (12.4g) is charged to the flask. A butanol addition (55.7g) is then charged to the flask and stirred for 18 hours. A 2nd butanol addition is charged to the flask and stirred for 3 hours. A 3rd butanol addition is charged to the flask and stirred for 2.5 hours. A 4th butanol addition is charged to the flask and stirred for 18 hours. A 5th butanol addition is charged to the flask and stirred for 3 hours. A 6th butanol addition is charged to the flask and stirred for 3 hours. 16.82 g of sodium hydroxide (50 mol % in water) is charged to the flask whilst heating to 150 °C and left to stir for a further 45 minutes. 7.56 g of dimethylaminopropylamine (to deliver 0.1% nitrogen to the copolymer) is charged to the flask and then stirred for 2 hours. The apparatus is arranged for vacuum distillation. The flask is heated to 100 °C and vacuum is applied and held for 30 minutes. The flask is heated to 130 °C and held for 45 minutes. The flask is then heated to 150 °C and held for a further 3 hours. The flask is then cooled to 100 °C and vacuum removed. The product is filtered through diatomaceous earth to afford the desired ester copolymer having approx 0.1% N, 2 mg KOH/g TBN.

Polymer intermediate 2: Ester copolymer 2 (Esc2) is prepared using the general procedure outlined above using 3-morpholinopropan-1-amine to deliver 0.12% nitrogen, 2.2 mg KOH/g TBN in place of dimethylaminopropylamine.

Polymer intermediate 3: Ester copolymer 3 (Esc3) is prepared using the general procedure outlined above using dimethylaminopropylamine to deliver 0.27% nitrogen, 4.8 mg KOH/g TBN.

Polymer intermediate 4: Ester copolymer 2 (Esc2) is prepared using the general procedure outlined above using 3-morpholinopropan-1-amine to deliver 0.25% nitrogen, approx 5 mg KOH/g TBN, in place of dimethylaminopropylamine.

Polymer intermediate 5: Ester copolymer 3 (Esc3) is prepared using the general procedure outlined above dimethylaminopropylamine to deliver 5.6 mg KOH/g TBN.

Polymer intermediate 6: Ester copolymer 5 (Esc5) is prepared using the general procedure outlined above using dimethylaminopropylamine to deliver 0.4% nitrogen, approx 8 mg KOH/g TBN.

Polymer intermediate 7: Ester copolymer 2 (Esc2) is prepared using the general procedure outlined above using 3-morpholinopropan-1-amine to deliver 0.4% nitrogen, approx 8 mg KOH/g TBN, in place of dimethylaminopropylamine.

Phosphate Intermediate 1: A 250 ml 3 neck round bottom flask is charged with isooctanol (137.4 g) and the flask is fitted with thermocouple, magnetic follower, and nitrogen inlet (250 cm³/min), and the alcohol is warmed to 50 °C and stirred. A screw feed addition funnel (dried for 24 hours at 100 °C) is charged with phosphorus pentoxide (50 g) under a nitrogen blanket. The screw feed addition funnel is added to flask and phosphorus pentoxide is added over approx 1 hours maintaining the temperature between 50 to 58 °C. The reaction flask is warmed to 90 °C and stirred for 5 hours and cooled to ambient temperature. The product has a TAN of 305.8 mg KOH/g.

Phosphate Intermediate 2: A 500 ml flange flask is fitted with overhead stirrer, water cooled condenser, screw feeder equipped with phosphorus pentoxide (81.88 g), a thermocouple, and a nitrogen inlet (250 cm³/min). The flask is charged with isooctanol (150 g) and 1,2-propanediol (43.90 g) and stirred at 300 rpm and warmed to 60 °C. Phosphorus pentoxide is added to maintain the temperature 60 to 70 °C over 1 hour. The reaction mixture is warmed to 90 °C and held for 5 hours. The reaction mixture is cooled to 70 °C and held under vacuum (1 kPa or 10 mbar) for 3 hours. A light brown, clear fluid is obtained. The product has a TAN of 216.0 mg KOH/g.

Phosphate Intermediate 3: A 500 mL 3-necked round bottom flask is equipped with magnetic stirrer, thermocouple and solid addition hopper with a 2-neck adaptor with nitrogen purge line and a bubbler to keep the system under a constant nitrogen blanket. Oleyl glycolate (200.21 g) is charged to the flask and heated to 60 °C with stirring. Phosphorus pentoxide (58.76 g) is added to the solid addition hopper and packed down under the nitrogen blanket. The phosphorus pentoxide is then added slowly over 3 hours, controlling the exotherm to keep the temperature of the reaction between 55 °C and 65 °C. The reaction is then left to cool overnight with a nitrogen purge. The next day the mixture is heated to 70 °C with stirring for 5 hours and cooled to room temperature affording the desired phosphate intermediate. The product has a TAN of 165.0 mg KOH/g.

Phosphate Intermediate 4: 2-ethylhexyl glycolate (39.44 g) is charged to 250 ml 3-necked round bottom flask fitted, magnetic follower, solid addition hopper charged with phosphorus pentoxide (9.93 g) under nitrogen. The 2-ethylhexyl glycolate is warmed to 60 °C and phosphorus pentoxide is added at such a rate as to maintain the temperature below 65°C for 40 minutes. The reaction mixture is heated to 60 °C before heating to 70 °C and held for 2 hours. The product is a pale red/brown viscous oil. The product has a TAN of 201.6 mg KOH/g.

Phosphate Intermediate 5: all glassware is dried at 100°C for 48 hours and constructed under nitrogen whilst hot. C₁₁₋₁₄ dialkyl tartrate (175 g) is charged to 500 ml 3-necked round bottom flask fitted with thermocouple, magnetic follower, solid addition hopper charged with phosphorus pentoxide (29.8 g) under nitrogen. The flask contents are stirred at 100 rpm at 55 °C and when at temperature the phosphorus pentoxide is added at such a rate as to maintain the temperature below 65 °C over a period of 40 minutes. The reaction mixture is heated to 60 °C and held for 4 hours before heating 70°C and held for 2 hours. The reaction mixture is cooled and a pale red/brown viscous oil is obtained. The product has TAN 96 mg KOH/g.

Phosphate Intermediate 5a: all glassware is dried at 100°C for 48 hours and constructed under nitrogen whilst hot. C₁₁₋₁₄ dialkyl tartrate (293.3 g) is charged to 500 ml 3-necked round bottom flask fitted with thermocouple, magnetic follower, solid addition hopper charged with phosphorus pentoxide (50 g) under nitrogen. The flask contents are stirred at 100 rpm at 50 °C and when at temperature the phosphorus pentoxide is added at such a rate as to maintain the temperature below 60 °C over a period of 40 minutes. The reaction mixture is heated to 50 °C and held for 18 hours before heating 70°C and held for 1 hour. The reaction mixture is cooled and a pale red/brown viscous oil is obtained. The product has TAN 92.2 mg KOH/g.

Phosphate Intermediate 6: all glassware is dried at 100°C for 48 hours and constructed under nitrogen whilst hot. C₁₁₋₁₄ dialkyl tartrate (255.51 g) is charged to 1 L flange flask fitted with thermocouple, water cooled condenser topped with bubbler, N₂ inlet at 100 cm³/min, and pressure equalising dropping funnel containing poly phosphoric acid, and the other port is blocked with a glass stopper. The dialkyl tartrate is warmed to 55 °C and stirred at 250 rpm at 55 °C, and polyphosphoric acid (52.3 g) is added at such a rate as to maintain the temperature below 65°C over a period of 30 minutes. The reaction mixture is heated to 60 °C for 4 hours and held for 4 hours. The flask is then heated to 70°C and held for 2 hours. The product is a pale red/brown viscous oil. The product has a TAN (bromophenol blue) 120.0 mg KOH/g.

Phosphate Intermediate 7: A 500 ml flange flask is fitted with overhead stirrer, water cooled condenser, screw feeder equipped charged with phosphorus pentoxide (81.88 g), and a thermocouple. Isooctanol (225 g) is charged to the flask and stirred at 300 rpm and warmed to 60 °C. Phosphorus pentoxide is added to maintain the temperature of 58 to 58 °C for a period of 1 hour. The reaction mixture is warmed to 90 °C and held for 5 hours and cooled to 38 °C and propylene oxide (55.60 g) is added subsurface over 1.5 hour and stirred for 2 hours. The flask is then cooled to 50 °C and phosphorus pentoxide (47.5 g) is added via screwfeeder over 1 hour. The flask is then heated to 90 °C and held with stirring for 5 hours. The flask is then cooled to ambient. The product is a coloured viscous liquid. The product has a TAN (bromophenol blue) of 180 mg KOH/g.

Phosphate Intermediate 8: A 500ml flask is charged with glycerol monooleate (356.54 g), and iso-octanol (1130 g). The flask is fitted with a flange lid and clip, PTFE stirrer gland, rod and overhead stirrer, thermocouple, water-cooled condenser, nitrogen inlet port and powder dropping funnel. The flask is heated to 50 °C with stirring at 350 rpm. Phosphorus pentoxide (141.9 g) is charged to the dropping funnel under N₂ and then charged to the flask over one hour. The temperature is kept below 60°C. The flask is stirred at 50°C for 18 hours. Vacuum (20-40 mbar) is applied to the reaction mixture for 2 hours to remove volatile components and the phosphate intermediate is then cooled to room temperature.

Final product 1: phosphate intermediate 1 (20.10 g) is added to polymer intermediate 2 (2000 g) at 70°C with stirring (250 rpm) under nitrogen and stirred for 2.5 hours. The desired product is isolated as a pale yellow, clear viscous liquid.

Final product 2: phosphate intermediate 2 (20.29 g) is added to polymer intermediate 2 at 70 °C with stirring (250 rpm) under nitrogen and stirred for 1.5 hours. The product is isolated as a pale yellow, clear viscous liquid.

Final product 3: phosphate intermediate 3 (26.5 g) is added to polymer intermediate 1 at 70 °C with stirring (250 rpm) under nitrogen and stirred for 1.5 hours. The product is isolated as a pale yellow, clear viscous liquid.

Final product 3: A 5 litre flange flask is fitted with PTFE gasket, flange lid, nitrogen inlet 200 cm³/min, thermocouple, overhead stirrer with PTFE gland and double wall water cooled condenser. The flask is charged with polymer intermediate 2 (2065.6 g) and warmed to 70°C and stirred at 350 rpm. The flask is charged with phosphate intermediate 4 (22.8 g). The charge takes approximately 5 minutes. The reaction contents are stirred for 7 hours at 70°C and cooled to room temperature to afford a pale coloured viscous oily product.

Final product 4: A 5 litre flange flask is fitted with PTFE gasket, flange lid, nitrogen inlet (200 cm³/min), thermocouple, overhead stirrer with PTFE gland and fitted with double wall water cooled condenser. The flask is charged with polymer intermediate 1 (3597.62 g) and the Phosphate Intermediate 5a (79.8 g) and stirred at 250 rpm, warming to 70 °C and held for 18 hours. The product is cooled to afford the desired product as a pale yellow viscous oil.

Final product 5: A 5 litre flange flask is fitted with PTFE gasket, flange lid, nitrogen inlet (200 cm³/min), thermocouple, overhead stirrer with PTFE gland and fitted with double wall water cooled condenser. The flask is charged with polymer intermediate 3 (4079.54 g) and phosphate intermediate 5 (203.01 g) and stirred at 300 rpm, warming to 70°C and hold for 20 hours. The product is cooled to room temperature to afford a pale yellow viscous oil.

Final product 6: A 5 litre flange flask is fitted with PTFE gasket, flange lid, nitrogen inlet (200 cm³/min), thermocouple, overhead stirrer with PTFE gland and fitted with double wall water cooled condenser. The flask is charged with polymer intermediate 3 (3000 g) and phosphate intermediate 6 (119 g) and stirred at 300 rpm, warmed to 80 °C and held for 4 hours. The product is cooled to room temperature to afford a pale yellow viscous oil.

Final product 7: O,O-bis(4-methylpentan-2-yl) S-hydrogen phosphorodithioate (22.09 g, TAN 198.1 mg KOH/g) is added to polymer intermediate 2 at 70 °C over 20 minutes with stirring (250 rpm) under nitrogen and stirred for 4 hours. The product is isolated as a pale yellow, clear viscous liquid.

Final product 8: to a 5 1 flange flask fitted with overhead stirrer, nitrogen inlet (200 cm³/min), water cooled condenser and thermocouple is added polymer intermediate 3 (1000 g), C12-14 dialkyl tartrate (31.76 g) and 115% polyphosphoric acid (21.69 g). The reaction mixture is stirred at 300 rpm and warmed to 80 °C. The reaction mixture is stirred for 1 hour and isooctanol (29.83 g) is added and stirred for 17 hours. To the reaction mixture is added polymer intermediate (2000 g) over 40 minutes, stirred 3 hours and cooled to room temperature to afford final product 8 as a viscous oil.

Final Product 9: Polymer intermediate 5 (25278 g) is stirred at 167 rpm, under 0.2 kg/h N₂ for 1 hours and C12-14 dialkyl tartrate (576.55 g) is added in one portion. Then the reactants are stirred overnight and polyphosphoric acid (190.89 g) is charged via manway. Stir 30 minutes and heat to 80 °C and stir for 4.5 hours. Butanol (83.01 g) is added via sampling pot, rinsed pot several times with reaction mixture and stirred 50 minutes, heat to 100 °C. Stir for 1.75 hours and cool to room temperature. The reaction mixture is filtered through diatomaceous earth (180 g) at 85 °C for 30 minutes and increase to 100 °C for 45 minutes. The product is a viscous amber oil.

Final product 10: phosphate intermediate 7 (24.29 g) is added to polymer intermediate 6 (2000 g) at 70 °C with stirring (250 rpm) under nitrogen and stirred for 1.5 hours. The desired product is isolated as a pale yellow, clear viscous liquid, Yield: 2024 g.

Final product 11: phosphate intermediate 5 (47.4 g) is added to polymer intermediate 2 (2000 g) at 70 °C with stirring (250 rpm) under nitrogen and stirred for 3 hours. The product is a dark brown viscous oil.

### Study 1: Manual Transmission Lubricant with about 300 ppm Phosphorus

Comparative manual transmission lubricant 1 (CMTL1) contains 75.2 wt % PAO-4 (polyalphaolefin 4 mm²/s (cSt)) base oil, 18.8 wt % of a viscosity modifier of Polymer intermediate 2 (i.e., a polymer that has not been phosphated), 0.35 wt % of a phosphorus antiwear agent, and the balance to 100 wt % of other conventional manual transmission lubricant additives. The lubricant has a phosphorus level of 310 ppm.

Inventive manual transmission lubricant 1 (IMTL1) contains 75.2 wt % PAO-4 (polyalphaolefin 4 mm²/s (cSt)) base oil, 19.0 wt % of a viscosity modifier based on the product of final product 2, 0.075 wt % of a phosphorus antiwear agent, and the balance to 100 wt % of other conventional manual transmission lubricant additives. The lubricant has a phosphorus level of 296 ppm.

CMTL1 and IMTL1 are evaluated by the methodology of ASTM Method D4172 (4-ball wear test), and FZG A10/16.6R/90 spur gear scuffing evaluation. The results obtained are as follows:

| | CMTL1 | IMTL1 |
|---|---|---|
| 4 ball wear scar (mm) | 0.453 | 0.344 |
| FZG revolutions at point of failure (Load stage 6) | 7956 | 21,700 |
| Weight loss pin (mg) | 213 | 114 |
| Weight loss of wheel (mg) | 302 | 148 |

The results indicate that the lubricating composition of the present invention has reduced wear in the 4 ball wear test and has prolonged durability in the FZG, indicating improved scuffing and wear resistance.

### Study 2: Manual Transmission Lubricant with about 500 ppm Phosphorus

Comparative manual transmission lubricant 2 (CMTL2) contains 75.8 wt % PAO-4 (polyalphaolefin 4 mm²/s (cSt)) base oil, 18.8 wt % of a viscosity modifier based of Polymer intermediate 2, 0.6 wt % of a phosphorus antiwear agent, and the balance to 100 wt % of other conventional manual transmission lubricant additives. The lubricant has a phosphorus level of 532 ppm.

Inventive manual transmission lubricant 2 (IMTL2) contains 76.1 wt % PAO-4 (polyalphaolefin 4 mm²/s (cSt)) base oil, 18.8 wt % of a viscosity modifier based on the product of final product 11, 0.3 wt % of a phosphorus antiwear agent, and the balance to 100 wt % of other conventional manual transmission lubricant additives. The lubricant has a phosphorus level of 499 ppm.

CMTL2 and IMTL2 are evaluated by the methodology of ASTM Method D4172 (4-ball wear test). The results obtained are:

| | CMTL2 | IMTL2 |
|---|---|---|
| 4 ball wear scar (mm) | 0.464 | 0.349 |

The results indicate that that the lubricating composition of the present invention has reduced wear in the 4 ball wear test when phosphorus content of the lubricant is about 500 ppm.

### Study 3: Automotive Gear Oil with about 800 ppm Phosphorus

Comparative automotive gear oil 1 (CAG1) contains 49.3 wt % PAO-4 (polyalphaolefin 4 mm²/s (cSt)) base oil, 46 wt % of a viscosity modifier of Intermediate Polymer 2, 1 wt % of a phosphorus antiwear agent described in [0112] above, and the balance to 100 wt % of other automotive gear oil lubricant additives. The lubricant has a phosphorus level of 839 ppm.

Inventive automotive gear oil 1 (IAG1) contains 49.9 wt % PAO-4 (polyalphaolefin 4 mm²/s (cSt)) base oil, 46 wt % of a viscosity modifier of Final Product 4, 0.4 wt % of a phosphorus antiwear agent described in [0112] above, and the balance to 100 wt % of other conventional manual transmission lubricant additives. The lubricant has a phosphorus level of 788 ppm.

CAG1 and IAG1 are evaluated for the capability for load-carrying, wear, and extreme pressure properties in a hypoid axle under conditions of low-speed, high-torque operation using ASTM method D6121-05a. The results obtained are presented in the table below.

The results in the table below indicate an automotive gear oil lubricant containing the composition of the present invention overall has reduced wear in ring and pinion. In particular, reduction in wear observed in ring gear ridging and pinion gear pitting/spalling.

| | ASTM D6121-05a Rating | |
|---|---|---|
| Parameter Rated | CAG1 | IAG1 |
| Ring Gear | | |
| Final Wear Rating | 7 | 7 |
| Final Surface Fatigue Rippling | 10 | 10 |
| Final Surface Fatigue Ridging | 9 | 10 |
| Final Surface Fatigue Pitting and Spalling Merit | 9.9 | 9.9 |
| Final Surface Fatigue Scoring | 10 | 10 |
| | | |

| Wear Pinion Gear | | |
|---|---|---|
| Final Rating | 8 | 6 |
| Final Rippling | 9 | 9 |
| Final Ridging | 9 | 9 |
| Final Scoring | 9.3 | 9.8 |
| Final Pitting and Spalling Merit | 10 | 10 |

It is known that some of the materials described above may interact in the final formulation, so that the components of the final formulation may be different from those that are initially added. The products formed thereby, including the products formed upon employing lubricant composition of the present invention in its intended use, may not be susceptible of easy description. Nevertheless, all such modifications and reaction products are included within the scope of the present invention; the present invention encompasses lubricant composition prepared by admixing the components described above.

As used herein, the term "hydrocarbyl substituent" or "hydrocarbyl group" is used in its ordinary sense, which is well-known to those skilled in the art. Specifically, it refers to a group having a carbon atom directly attached to the remainder of the molecule and having predominantly hydrocarbon character. Examples of hydrocarbyl groups include: hydrocarbon substituents, including aliphatic, alicyclic, and aromatic substituents; substituted hydrocarbon substituents, that is, substituents containing non-hydrocarbon groups which, in the context of this invention, do not alter the predominantly hydrocarbon nature of the substituent; and hetero substituents, that is, substituents which similarly have a predominantly hydrocarbon character but contain other than carbon in a ring or chain. A more detailed definition of the term "hydrocarbyl substituent" or "hydrocarbyl group" is described in paragraphs [0137] to [0141] of published application US 2010-0197536.

Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated.

It is to be understood that the upper and lower amount, range, and ratio limits set forth herein may be independently combined. Similarly, the ranges and amounts for each element of the invention may be used together with ranges or amounts for any of the other elements.

While the invention has been explained in relation to its preferred embodiments, it is to be understood that various modifications thereof will become apparent to those skilled in the art upon reading the specification.

## Claims

1. A lubricating composition comprising an oil of lubricating viscosity and a (thio)phosphate salt of an amine-functionalized esterified copolymer, wherein the esterified copolymer comprises units derived from monomers:
(i) an α-olefin wherein the α-olefin includes 1-decene, 1-undecene, 1-dodecene, 1-tridecene, 1-tetradecene, 1-pentadecene, 1-hexadecene, 1-heptadecene, 1-octadecene, or mixtures thereof; and
(ii) an ethylenically unsaturated carboxylic acid or derivative thereof, esterified with at least one alcohol, wherein at least a portion of carboxylic acid groups of the unsaturated carboxylic acid are reacted with at least one amine; and wherein the (thio)phosphate salt of the amine-functionalised esterified copolymer is present in the lubricating composition in an amount of from 0.1 wt% to 70 wt%.

2. The lubricating composition of claim 1, wherein the α-olefin is 1-dodecene.

3. The lubricating composition of claim 1, wherein the ethylenically unsaturated carboxylic acid or derivative thereof includes itaconic anhydride, maleic anhydride, methyl maleic anhydride, ethyl maleic anhydride, dimethyl maleic anhydride or mixtures thereof.

4. The lubricating composition of any preceding claim 1 to 3, wherein the α-olefin is 1-dodecene and the unsaturated carboxylic acid or derivative thereof is maleic anhydride.

5. The lubricating composition of any preceding claim 1 to 4, wherein the copolymer has, prior to esterification, a reduced specific viscosity of up to 0.08 measured as disclosed in the description.

6. The lubricating composition of any preceding claim 1 to 5, wherein the alcohol comprises a primary alcohol branched at the β- or higher position and may have at least 12, or at least 16, or at least 18 or at least 20 carbon atoms.

7. The lubricating composition of any preceding claim 1 to 5, wherein the alcohol comprises a mixture of (i) a Guerbet alcohol and (ii) a linear alcohol containing 6 to 20, or 8 to 18, or 10 to 15 carbon atoms other than a Guerbet alcohol.

8. The lubricating composition of any preceding claim 1 to 7, wherein the amine includes an amino-hydrocarbyl morpholine , an aminoalcohol, N,N-dimethylacrylamide, a N-vinyl carbonamide, vinyl pyridine, N-vinyl imidazole, N-vinyl pyrrolidinone, N-vinyl caprolactam, a dialkylaminoalkyl (meth)acrylamide or dialkylaminoalkyl (meth)acrylate, a N-substituted alkanediamine, or mixtures thereof.

9. The lubricating composition of claim 8, wherein the amino alcohol includes at least one of dimethylethanolamine, ethanolamine, isopropanolamine, diethanolamine, triethanolamine, N,N-diethylethanolamine, N,N-dibutylethanolamine, 3-amino-1,2-propanediol, serinol, 2-amino-2-methyl-1,3-propanediol, tris(hydroxymethyl)-aminomethane, diisopropanolamine, N-methyldiethanolamine, 3-(dimethylamino)-2,2-dimethylpropan-1-ol, and 2-(2-aminoethylamino)ethanol.

10. The lubricating composition of any preceding claim 1 to 9, wherein the (thio)phosphate salt is derivable from a (thio)phosphating agent or a (thio)phosphorylating agent which may have phosphorus in its +5 oxidation state.

11. The lubricating composition of claim 10, wherein the (thio)phosphorylating agent comprises at least one of POCl₃, P₂O₅, P₄O₁₀, polyphosphoric acid, P₂S₅, P₄S₁₀, phosphoric acid, thiophosphoric acid, or mixtures thereof.

12. The lubricating composition of claim 10, wherein the (thio)phosphate salt is a product obtainable by reacting: the esterified copolymer with a (thio)phosphate, wherein the (thio)phosphate is obtainable by reacting a hydroxy-containing carboxylic compound, a phosphating agent, and optionally an alcohol.

13. A method of lubricating a mechanical device comprising supplying to the device a lubricating composition of any preceding claim 1 to 12.

14. The method of claim 13, wherein the mechanical device is a driveline device.

15. The method of claim 14, wherein the driveline device is a manual transmission.

## Patentansprüche

1. Schmierzusammensetzung, die ein Öl von schmierender Viskosität und ein (Thio)phosphatsalz eines aminfunktionalisierten veresterten Copolymers umfasst, wobei das veresterte Copolymer Einheiten umfasst, die von Monomeren abgeleitet sind:
i. ein α-Olefin, wobei das α-Olefin 1-Decen, 1-Undecen, 1-Dodecen, 1-Tridecen, 1-Tetradecen, 1-Pentadecen, 1-Hexadecen, 1-Heptadecen, 1-Octadecen oder Gemische davon umfasst; und
ii. eine ethylenisch ungesättigte Carboxylsäure oder ein Derivat davon, die mit mindestens einem Alkohol verestert ist, wobei mindestens ein Teil der Carboxylsäuregruppen der ungesättigten Carboxylsäure mit mindestens einem Amin zur Reaktion gebracht werden; und
wobei das (Thio)phosphatsalz des aminfunktionalisierten veresterten Copolymers in der Schmierzusammensetzung in einer Menge im Bereich von 0,1 Gew.-% bis 70 Gew.-% vorliegt.

2. Schmierzusammensetzung nach Anspruch 1, wobei das α-Olefin 1-Dodecen ist.

3. Schmierzusammensetzung nach Anspruch 1, wobei die ethylenisch ungesättigte Carboxylsäure oder das Derivat davon Itaconsäureanhydrid, Maleinsäureanhydrid, Methylmaleinsäureanhydrid, Ethylmaleinsäureanhydrid, Dimethylmaleinsäureanhydrid oder Gemische davon umfasst.

4. Schmierzusammensetzung nach einem der vorangehenden Ansprüche 1 - 3, wobei das α-Olefin 1-Dodecen ist und die ungesättigte Carboxylsäure oder das Derivat davon Maleinsäureanhydrid ist.

5. Schmierzusammensetzung nach einem der vorangehenden Ansprüche 1 - 4, wobei das Copolymer vor der Veresterung eine reduzierte spezifische Viskosität von bis zu 0,08, gemessen wie in der Beschreibung offenbart, aufweist.

6. Schmierzusammensetzung nach einem der vorangehenden Ansprüche 1 - 5, wobei der Alkohol einen primären Alkohol umfasst, der an der β- oder einer höheren Position verzweigt ist, und mindestens 12, oder mindestens 16, oder mindestens 18, oder mindestens 20 Kohlenstoffatome haben kann.

7. Schmierzusammensetzung nach einem der vorangehenden Ansprüche 1 - 5, wobei der Alkohol ein Gemisch aus (i) einem Guerbet-Alkohol und (ii) einem linearen Alkohol umfasst, der 6 bis 20, oder 8 bis 18, oder 10 bis 15 Kohlenstoffatome umfasst, mit Ausnahme von einem Guerbet-Alkohol.

8. Schmierzusammensetzung nach einem der vorangehenden Ansprüche 1 - 7, wobei das Amin ein Aminohydrocarbylmorpholin, einen Aminoalkohol, N,N-Dimethylacrylamid, ein N-Vinylcarbonamid, Vinylpyridin, N-Vinylimidazol, N-Vinylpyrrolidinon, N-Vinylcaprolactam, ein Dialkylaminoalkyl(meth)acrylamid oder Dialkylaminoalkyl(meth)acrylat, ein N-substituiertes Alkandiamin oder Gemische davon umfasst.

9. Schmierzusammensetzung nach Anspruch 8, wobei der Aminoalkohol mindestens eins aus Dimethylethanolamin, Ethanolamin, Isopropanolamin, Diethanolamin, Triethanolamin, N,N-Diethylethanolamin, N,N-Dibutylethanolamin, 3-Amino-1,2-Propandiol, Serinol, 2-Amino-2-Methyl-1,3-Propandiol, Tris(hydroxymethyl)-Aminomethan, Diisopropanolamin, N-Methyldiethanolamin, 3-(Dimethylamino)-2,2,-Dimethylpropan-1-ol und 2-(2-Aminoethylamino)ethanol umfasst.

10. Schmierzusammensetzung nach einem der vorangehenden Ansprüche 1 - 9, wobei das (Thio)phosphatsalz aus einem (Thio)phosphatiermittel oder einem (Thio)phosphorylierungsmittel ableitbar ist, das Phosphor in seinem +5-Oxidationszustand enthalten kann.

11. Schmierzusammensetzung nach Anspruch 10, wobei das (Thio)phosphorylierungsmittel mindestens eins aus POCl₃, P₂O₅, P₄O₁₀, Polyphosphorsäure, P₂S₅, P₄S₁₀, Phosphorsäure, Thiophosphorsäure oder Gemische davon umfasst.

12. Schmierzusammensetzung nach Anspruch 10, wobei das (Thio)phosphatsalz ein Produkt ist, das erhalten werden kann durch zur Reaktion bringen von: dem veresterten Copolymer mit einem (Thio)phosphat, wobei das (Thio)phosphat erhalten werden kann durch zur Reaktion bringen einer hydroxyhaltigen Carboxylverbindung, eines Phosphatiermittels und wahlweise eines Alkohols.

13. Verfahren zum Schmieren einer mechanischen Vorrichtung, welches das Zuführen einer Schmierzusammensetzung eines der vorangehenden Ansprüche 1 bis 12 zu der Vorrichtung umfasst.

14. Verfahren nach Anspruch 13, wobei die mechanische Vorrichtung eine Vorrichtung im Antriebsstrang ist.

15. Verfahren nach Anspruch 14, wobei die Vorrichtung im Antriebsstrang ein Schaltgetriebe ist.

## Revendications

1. Composition lubrifiante comprenant une huile de viscosité lubrifiante et un sel de (thio)phosphate d'un copolymère estérifié fonctionnalisé par amine, où le copolymère estérifié comprend des motifs dérivés des monomères suivants :
(i) une α-oléfine où l'α-oléfine inclut les suivantes : 1-décène, 1-undécène, 1-dodécène, 1-tridécène, 1-tétradécène, 1-pentadécène, 1-hexadécène, 1-heptadécène, 1-octadécène, ou leurs mélanges ; et
(ii) un acide carboxylique à insaturation éthylénique ou un dérivé de celui-ci, estérifié par au moins un alcool, où au moins une portion des groupements acide carboxylique de l'acide carboxylique insaturé réagit avec au moins une amine ; et
où le sel de (thio)phosphate du copolymère estérifié fonctionnalisé par amine est présent dans la composition lubrifiante à une teneur comprise entre 0,1 % en masse et 70 % en masse.

2. Composition lubrifiante selon la revendication 1, où l'α-oléfine est le 1-dodécène.

3. Composition lubrifiante selon la revendication 1, où l'acide carboxylique à insaturation éthylénique ou le dérivé de celui-ci inclut l'anhydride itaconique, l'anhydride maléique, l'anhydride méthylmaléique, l'anhydride éthylmaléique, l'anhydride diméthylmaléique ou leurs mélanges.

4. Composition lubrifiante selon l'une quelconque des revendications précédentes 1 à 3, où l'α-oléfine est le 1-dodécène et l'acide carboxylique insaturé ou le dérivé de celui-ci est l'anhydride maléique.

5. Composition lubrifiante selon l'une quelconque des revendications précédentes 1 à 4, où le copolymère présente avant estérification une viscosité spécifique réduite allant jusqu'à 0,08 mesurée comme décrit dans la description.

6. Composition lubrifiante selon l'une quelconque des revendications précédentes 1 à 5, où l'alcool comprend un alcool primaire ramifié en position β ou supérieure et peut comporter au moins 12, ou au moins 16, ou au moins 18 ou au moins 20 atomes de carbone.

7. Composition lubrifiante selon l'une quelconque des revendications précédentes 1 à 5, où l'alcool comprend un mélange de (i) un alcool de Guerbet et (ii) un alcool linéaire comportant 6 à 20, ou 8 à 18, ou 10 à 15 atomes de carbone différent d'un alcool de Guerbet.

8. Composition lubrifiante selon l'une quelconque des revendications précédentes 1 à 7, où l'amine inclut une amino-hydrocarbylmorpholine, un aminoalcool, un N,N-diméthylacrylamide, un N-vinylcarbonamide, une vinylpyridine, un N-vinylimidazole, une N-vinylpyrrolidinone, un N-vinylcaprolactame, un (méth)acrylamide de dialkylaminoalkyle ou un (méth)acrylate de dialkylaminoalkyle, une alcanediamine N-substituée, ou leurs mélanges.

9. Composition lubrifiante selon la revendication 8, où l'aminoalcool inclut au moins l'un des membres du groupe constitué par : diméthyléthanolamine, éthanolamine, isopropanolamine, diéthanolamine, triéthanolamine, N,N-diéthyléthanolamine, N,N-dibutyléthanolamine, 3-amino-1,2-propanediol, sérinol, 2-amino-2-méthyl-1,3-propanediol, tris(hydroxyméthyl)-aminométhane, diisopropanolamine, N-méthyldiéthanolamine, 3-(diméthylamino)-2,2-diméthylpropan-1-ol, et 2-(2-aminoéthylamino)éthanol.

10. Composition lubrifiante selon l'une quelconque des revendications précédentes 1 à 9, où le sel de (thio)phosphate est dérivable d'un agent (thio)phosphatant ou d'un agent (thio)phosphorylant qui peut comporter un phosphore à l'état d'oxydation +5.

11. Composition lubrifiante selon la revendication 10, où l'agent (thio)phosphorylant comprend au moins l'un des éléments du groupe : POCl₃, P₂O₅, P₄O₁₀, acide polyphosphorique, P₂S₅, P₄S₁₀, acide phosphorique, acide thiophosphorique, ou leurs mélanges.

12. Composition lubrifiante selon la revendication 10, où le sel de (thio)phosphate est un produit pouvant être obtenu par réaction : du copolymère estérifié avec un (thio)phosphate, où le (thio)phosphate peut être obtenu par réaction d'un composé carboxylique portant une fonction hydroxy, d'un agent phosphatant, et éventuellement d'un alcool.

13. Procédé de lubrification d'un dispositif mécanique comprenant l'introduction dans le dispositif d'une composition lubrifiante selon l'une quelconque des revendications 1 à 12.

14. Procédé selon la revendication 13, où le dispositif mécanique est un dispositif de ligne d'arbres de transmission.

15. Procédé selon la revendication 14, où le dispositif de ligne d'arbres de transmission est une transmission manuelle.
